# EUROPEAN PATENT SPECIFICATION

(11) **EP 4 099 110 B1**
(45) Date of publication and mention of the grant of the patent: **07.10.2026**
(21) Application number: 21747401.4
(22) Date of filing: 26.01.2021
(51) Int. Cl.: G05B 19/05, B23Q 15/00, G05B 19/18, G05B 19/4097

(54) **CONTROL PROGRAM GENERATION DEVICE, CONTROL PROGRAM GENERATION METHOD, AND PROGRAM**
STEUERUNGSPROGRAMMERZEUGUNGSVORRICHTUNG, STEUERUNGSPROGRAMMERZEUGUNGSVERFAHREN UND PROGRAMM
DISPOSITIF DE GÉNÉRATION DE PROGRAMME DE COMMANDE, PROCÉDÉ DE GÉNÉRATION DE PROGRAMME DE COMMANDE, ET PROGRAMME

(30) Priority: 28.01.2020 JP 2020011386; 20.04.2020 JP 2020075017
(43) Date of publication of application: 07.12.2022
(73) Proprietor: Opton Co., Ltd., Seto-shi, Aichi 489-8645 (JP)
(72) Inventor: YOGO, Teruaki, Seto-shi,Aichi 489-8645 (JP)
(74) Representative: Hasegawa, Kan
(86) International application number: PCT/JP2021/002546
(87) International publication number: WO 2021/153533

(56) References cited:
- JP-A- H03 154 105
- JP-A- H11 202 912
- US-A1- 2013 338 797
- US-A1- 2014 306 643
- US-A1- 2016 059 412
- US-A1- 2016 231 733

## Description

### BACKGROUND OF INVENTION

### Field of the Invention

The present invention relates to a technique for generating a control program for an automated manufacturing machine including multiple actuators.

### Background Art

Labor savings at manufacturing sites such as factories have recently been in focus across many industries, and this trend is expected to increase. Such labor savings at manufacturing sites may be achieved using automated manufacturing machines for automatic operations, such as holding objects to be machined or manufactured, conveying objects, machining objects variously, and heating objects.

Various automated manufacturing machines have been developed depending on the object to be machined or manufactured, the type of machining (e.g., cutting or bending), and the degree of heating food (refer to, for example, JP 2011-245602 and JP 2018-192570).

The size, shape, material, or other features of objects to be machined or manufactured differ at each manufacturing site. The type of machining, the type of heating, or other operational details also differ at each manufacturing site. An automated manufacturing machine used at one manufacturing site cannot be easily introduced to another manufacturing site. In many cases, an automated manufacturing machine dedicated to each manufacturing site is to be developed newly.

US 2016/059412A relates to a technique to create complex robotic humanoid movements, actions, and interactions with tools and the instrumented environment by automatically building movements for the humanoid; actions and behaviors of the humanoid based on a set of computer-encoded robotic movement and action primitives.

US 2014/306643A1 discloses a motion controller including a controller configured to output a motor driving command based on a motion-and-sequence time chart used for motion control of a motor, to a motor driving apparatus. The controller is configured to receive the motion-and-sequence time chart, which has been created by a general-purpose PC, from the general-purpose PC via a higher-layer network. The controller is configured to receive the motion-and-sequence time chart including a command data sequence included in the motor driving command for the motor driving apparatus. The controller is configured to receive the motion-and-sequence time chart including a sequence time chart that describes a coordinated relationship between the motion control of the motor and a certain two-level input/output signal relating to the motion control of the motor.

Document US2016/231733A1discloses a program creation device. A processing unit generates an operation program for executing an operation command of the type designated by a second input, to which the parameter input by the second input is applied, at an execution timing according to the arrangement position designated by a first input.

Document US2013/338797A1 discloses a generation device for a machine control program to be executed on a controller for controlling a machine component, including: a connected device selector for selecting a connected device to be connected to the controller and a connector identifier assignor for assigning, when the connected device selector selects the connected device, a new connector identifier for identifying a connector for connecting the controller and the selected connected device to each other to the selected connected device.

### SUMMARY OF INVENTION

### TECHNICAL PROBLEM

Developing a new automated manufacturing machine involves creating a new control program for controlling the automated manufacturing machine. This may obstruct the introduction of a new automated manufacturing machine to a manufacturing site. This occurs for the reasons below.

To develop a new automated manufacturing machine, a machine designer first determines various functions to be included in the automated manufacturing machine, and creates drawings of the automated manufacturing machine to perform such functions. An engineer skilled in creating programs (programmer) then learns the operations of various actuators and machine parts shown in the drawings, and creates the control program to cause the actuators to operate in cooperation to perform the functions to be included.

Creating the control program involves such an expert programmer, and the programmer is to wait for the design of the automated manufacturing machine before starting programming, causing a delay in creating the control program. The programmer also takes time to learn the operations of various actuators and machine parts. This causes a long time to be taken from starting to develop the automated manufacturing machine to its delivery to the manufacturing site, obstructing the introduction of a new automated manufacturing machine to the manufacturing site.

In response to the above issue with the known technique, one or more aspects of the present invention are directed to a technique for automatically generating a control program for an automated manufacturing machine to greatly reduce the time taken to develop a new automated manufacturing machine.

### SOLUTION TO PROBLEM

The problem is solved by the teachings of the independent claims. Further embodiments are defined in the dependent claims. A control program generation apparatus according to the invention is defined in claim 1.

A control program generation method according to the invention is defined in claim 7.

In the control program generation apparatus and the control program generation method according to the aspects of the present invention, the element actions of multiple actuators included in the automated manufacturing machine are prestored in a manner associated with program elements to perform the element actions. The operation of the automated manufacturing machine is pre-described on the action chart below. The action chart includes the subperiods into which the operation period from the start to the end of the operation of the automated manufacturing machine is divied. The action chart includes the element actions included in the operation of the automated manufacturing machine. The element actions are assigned to the subperiods to pre-create the action chart describing the operation of the automated manufacturing machine. The action chart describing the operation of the automated manufacturing machine is read. The element actions described on the action chart are converted into program elements. The program elements are combined together in the order of the subperiods to generate the control program for the automated manufacturing machine.

The element actions of the actuators are simple actions of actuators. The program elements to cause the actuators to perform the element actions can thus be pre-created. The machine designer designs and achieves the operation of the automated manufacturing machine by combining the element actions of the actuators. The machine designer who has designed the automated manufacturing machine or an engineer with sufficient knowledge about the structure of the automated manufacturing machine can easily create the action chart describing the operation of the automated manufacturing machine. The control program for controlling the operation of the automated manufacturing machine can thus be generated automatically simply by reading the action chart, converting the element actions on the action chart into program elements, and combining the program elements together in accordance with the action chart.

In the control program generation apparatus according to the above aspect of the present invention, the action chart below may be used to describe the operation of the automated manufacturing machine. The action chart may be a table including the subperiods arranged in one of the horizontal direction or the vertical direction and the actuators assigned and arranged in the other of the horizontal direction or the vertical direction. Each of the element actions may be written at a coordinate position on the tabular action chart to describe the operation of the automated manufacturing machine.

The actuator to perform an element action can thus be identified by the coordinate position on the action chart without the element action being specific to the actuator. The same element action can thus be assigned to different actuators, allowing fewer types of program elements to be used. The engineer can also easily notice any subperiod or actuator unassigned with an element action and correct any mistake on the action chart, thus allowing an appropriate control program to be generated.

In the control program generation apparatus according to the above aspect of the present invention, the action chart describing the operation of the automated manufacturing machine may include at least one of a timing action to be performed with a timer or a counting action to be performed with a counter as an action equivalent to an element action.

The action described on the action chart can thus include, for example, delaying the start of an action until a predetermined time elapses or until the number of times a predetermined button is pressed reaches a predetermined count.

In the control program generation apparatus according to the above aspect of the present invention, the action chart describing the operation of the automated manufacturing machine may include a switching detection action to monitor a state of a switch and detect switching as an action equivalent to an element action.

The action described on the action chart can thus include, for example, prohibiting an actuator from acting until a component passes.

In the control program generation apparatus according to the above aspect of the present invention, the action chart describing the operation of the automated manufacturing machine may include at least one of a sound output action to be performed with a speaker or a lighting action to be performed with an illuminator as an action equivalent to an element action.

The operation of the automated manufacturing machine described on the action chart can thus include, for example, activating an actuator after outputting a sound effect or other sound from the speaker or after turning on or flashing the illuminator.

In the control program generation apparatus according to the above aspect of the present invention, the action chart describing the operation of the automated manufacturing machine may include a heating action to be performed with a heater as an action equivalent to an element action.

The operation of the automated manufacturing machine described on the action chart can thus include, for example, heat-treating metal material or cooking food.

The above control program generation method according to one or more aspects of the present invention may also be implemented as a program for causing a computer to perform the control program generation method according to the wording of claim 8.

The program can be loaded and executed by the computer to automatically generate the control program for controlling the operation of the automated manufacturing machine from the action chart.

### BRIEF DESCRIPTION OF THE DRAWINGS

FIG. 1 is an external view of an automated manufacturing machine 1 controllable with a control apparatus 100 for the automated manufacturing machine according to an embodiment.
FIG. 2 is a conceptual block diagram of the control apparatus 100 controlling the actions of actuators 10 to 20 incorporated in the automated manufacturing machine 1.
FIGs. 3A and 3B are conceptual diagrams showing general processes for developing a new automated manufacturing machine 1.
FIGs. 4A, to 4C are diagrams showing the basic principle of automatically generating a control program for the automated manufacturing machine 1 from an action chart (YOGO chart) with the control apparatus 100 according to the present embodiment.
FIG. 5 is an example action chart (YOGO chart) shown partially for the automated manufacturing machine 1 to be read by the control apparatus 100 according to the present embodiment.
FIG. 6 is an example action chart (YOGO chart) including actions to be repeated and conditional branching.
FIGs. 7A, to 7F are diagrams showing example descriptions of actions defined to be equivalent to element actions on the action chart (YOGO chart).
FIG. 8 is a functional block diagram of the control apparatus 100 for the automated manufacturing machine according to the present embodiment.
FIG. 9 is a table showing example correspondences stored in an element action storage 102 in the present embodiment.
FIG. 10 is a flowchart of a control program generation process for generating the control program from the action chart (YOGO chart) performed by the control apparatus 100 according to the present embodiment.
FIG. 11 is a flowchart of a YOGO chart analysis process performed in the control program generation process.
FIG. 12 is a diagram of example intermediate data resulting from the YOGO chart analysis process.
FIG. 13 is a diagram of an example control program resulting from conversion of the intermediate data.
FIG. 14 is a flowchart of an action control process for controlling the actions of the actuators based on control program data performed by the control apparatus 100 according to the present embodiment.
FIG. 15 is a diagram of a control apparatus 100 for an automated manufacturing machine according to a modification in which a control program generator 105 and a control unit 106 refer to different storages.
FIG. 16 is a diagram of a control apparatus 100 for an automated manufacturing machine according to a modification including a YOGO chart processor 100a and a controller 100b.

### DETAILED DESCRIPTION

### A. Apparatus Structure

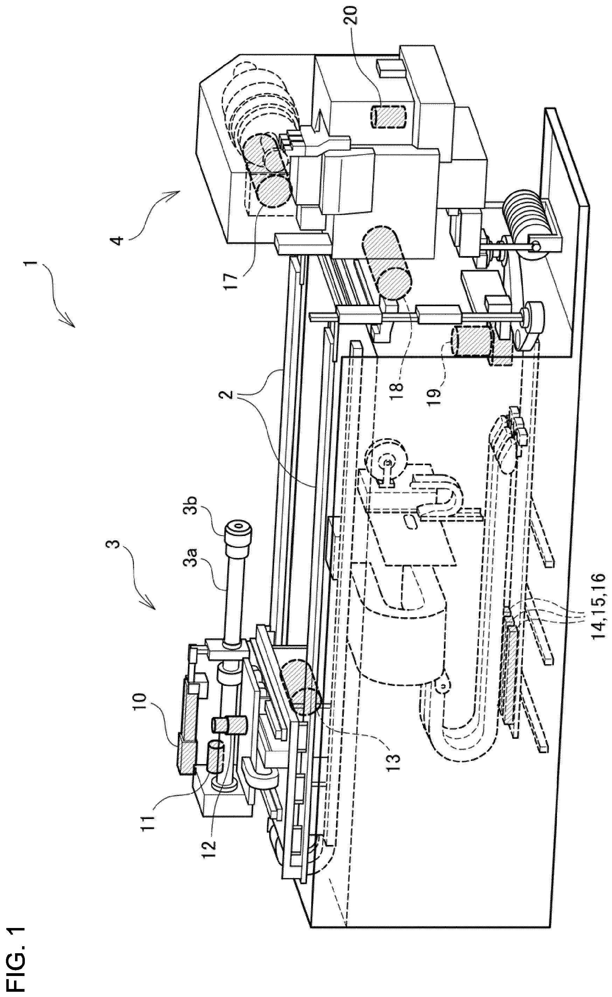

FIG. 1 is a general external view of an automated manufacturing machine 1 in the present embodiment. The automated manufacturing machine 1 in the present embodiment is an equipment of a machine tool (pipe bender machine) for automatically bending a long pipe into an intended shape. The automated manufacturing machine 1 in the present embodiment may be other than a pipe bender machine and may be any manufacturing machine that incorporates multiple actuators and automatically performs multiple operations such as holding, conveying, machining, or heating objects. The automated manufacturing machine 1 may be, for example, an automated food manufacturing machine, or may be a manufacturing system combining a multi-joint robotic arm with a conveyor.

As shown in FIG. 1, the automated manufacturing machine 1 in the present embodiment is externally in the shape of a substantially horizontal rectangular prism. The automated manufacturing machine 1 includes two rails 2 extending lengthwise over the upper surface of the rectangular prism. The automated manufacturing machine 1 incorporates a conveyor unit 3 for holding and conveying a pipe to be machined (not shown) at one end (left in FIG. 1) of the rails 2. The automated manufacturing machine 1 incorporates a machining unit 4 at the end opposite to the conveyor unit 3. The machining unit 4 is used for machining, such as bending, of the pipe (not shown). The conveyor unit 3 includes a protruding cylindrical holder shaft 3a with a chuck 3b attached to its distal end for holding the pipe (not shown). The conveyor unit 3 is moved on the rails 2 with the chuck 3b holding the pipe to supply the pipe to the machining unit 4, which can then bend or otherwise machine the pipe.

The automated manufacturing machine 1 in the present embodiment can control the movement distance of the conveyor unit 3 and thus the conveying distance of the pipe. The position on the pipe to be machined or for example bent can thus be controlled as appropriate. The holder shaft 3a with the chuck 3b can be turned (twisted) about its axis to bend the pipe in an intended direction. To achieve the above operations, the conveyor unit 3 incorporates an actuator 10 for opening and closing the chuck 3b, an actuator 11 for turning the holder shaft 3a about its axis, an actuator 12 for axially moving the holder shaft 3a forward or backward, and an actuator 13 for moving the conveyor unit 3 forward or backward on the rails 2. In the automated manufacturing machine 1 in the present embodiment, the actuators 10 to 13 are all servomotors actable on alternating current power. However, the automated manufacturing machine 1 may include actuators with other driving schemes (e.g., hydraulic cylinders, solenoids, or stepper motors) as appropriate for the intended performance of the actuators. The conveyor unit 3 also incorporates sensors such as encoders and limit switches for detecting the rotational position of the holder shaft 3a and the movement position of the conveyor unit 3. Such sensors are not shown in FIG. 1 to avoid complexity in the figure.

The machining unit 4 incorporates an actuator 17 for bending a pipe, an actuator 18 for changing the position on the pipe to which a force is applied for bending the pipe, an actuator 19 for vertically moving the overall machining unit 4, and an actuator 20 for forming a flat end surface (or a flange) or an annular protrusion (or a bulge) on the pipe. The machining unit 4 also incorporates switches and sensors such as contact switches and encoders. The switches and sensors are not shown to avoid complexity in the figure.

The machining unit 4 also incorporates multiple driver circuits (not shown) for driving the above actuators 10 to 13 and 17 to 20. The driver circuits are electrical components with the functions below. To act as intended, the actuators 10 to 13 and 17 to 20 are to receive drive currents with appropriate waveforms. The drive currents to be supplied to the actuators 10 to 13 and 17 to 20 differ depending on their driving schemes. Although actuators are driven with the same driving scheme, these actuators may be driven with different drive current values. The machining unit 4 thus includes electrical components, or driver circuits, designed specifically for the actuators 10 to 13 and 17 to 20. The driver circuits output appropriate drive currents to the actuators 10 to 13 and 17 to 20 for driving these actuators in accordance with instructions specified by the control apparatus 100.

As shown in FIG. 1, the space below the two rails 2 accommodates various machine parts. The space accommodates electrical cables (not shown) for supplying drive currents from the multiple driver circuits (not shown) in the machining unit 4 to the actuators 10 to 13 in the conveyor unit 3, and signal cables (not shown) for transmitting signals from the switches and sensors in the conveyor unit 3 to the machining unit 4. The electrical cables and the signal cables move in the space as the conveyor unit 3 moves forward or backward on the rails 2, possibly being entangled or caught on any component. To avoid such a situation, the space below the rails 2 also accommodates the actuators 14 to 16. For the electrical cables and the signal cables having any unintended play, the actuators 14 to 16 pull the cables to eliminate the play. For the electrical cables and the signal cables being tensioned with a strong force, the actuators 14 to 16 loosen the cables to provide appropriate play. In the automated manufacturing machine 1 in the present embodiment, the actuators 14 to 16 are air cylinders actable under control by the control apparatus 100 with driver circuits (not shown).

As described above, the automated manufacturing machine 1 incorporates the many actuators 10 to 20. To automatically machine an object (a pipe in this example) into an intended shape, the actuators 10 to 20 are to act timely and appropriately. The actuators 10 to 20 are driven by their respective driver circuits. The driver circuits drive the respective actuators 10 to 20 in accordance with the control program preloaded by the control apparatus 100 (described later).

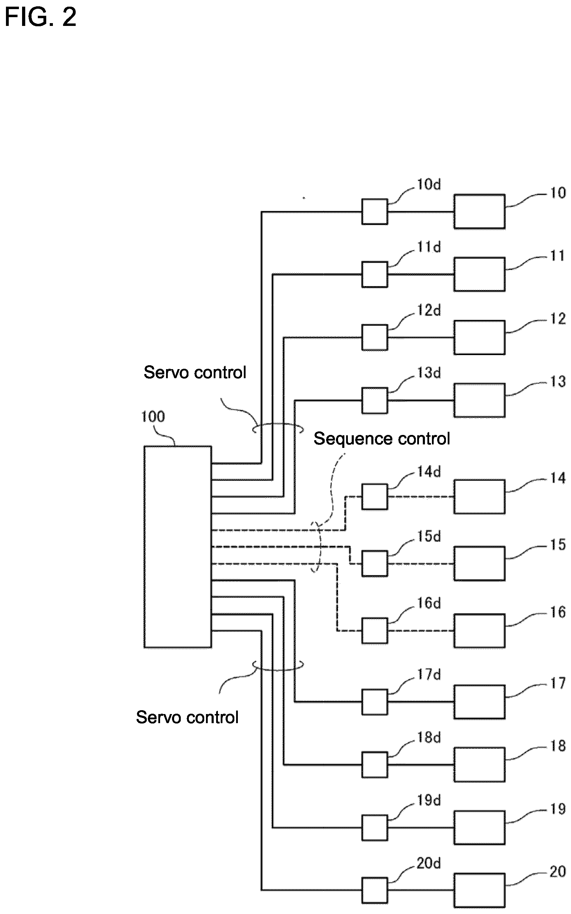

FIG. 2 is a conceptual block diagram of the control apparatus 100 (e.g., including one or more processors and data storage) according to the present embodiment controlling the actions of the actuators 10 to 20 incorporated in the automated manufacturing machine 1. In FIG. 2, the switches and sensors used for the control are not shown. As shown in the figure, a driver circuit 10d for driving the actuator 10 is between the actuator 10 and the control apparatus 100. The control apparatus 100 directly controls the driver circuit 10d. For the actuators 11 to 20 as well, driver circuits 11d to 20d for driving the respective actuators 11 to 20 are between the actuators 11 to 20 and the control apparatus 100. The control apparatus indirectly controls the actions of the actuators 11 to 20 with the driver circuits 11d to 20d.

As described above with reference to FIG. 1, the automated manufacturing machine 1 in the present embodiment includes the actuators 10 to 13 and 17 to 20 being servomotors and the actuators 14 to 16 being air cylinders. The servomotors herein are servo-controlled motors that typically regulate the values of current through the motors by feedback control to cause the positions (or the angles, speeds, or other parameters) to have target values. The air cylinders herein are actuators that linearly move their actable parts using air pressure and operate by opening and closing the ports connected to sources of compressed air. The ports are open and closed under sequence control.

The servo-controlled actuators 10 to 13 and 17 to 20 and the sequence-controlled actuators 14 to 16 are thus connected to the control apparatus 100 according to the present embodiment. In the figure, the solid lines connecting the actuators 10 to 13 and 17 to 20 to the control apparatus 100 indicate the actuators 10 to 13 and 17 to 20 being servo-controlled. In the figure, the dashed lines connecting the actuators 14 to 16 to the control apparatus 100 indicate the actuators 14 to 16 being sequence-controlled. Actuators controlled with any scheme other than servo control or sequence control may also be connected to the control apparatus 100.

The control apparatus 100 controls the actuators 10 to 20 with the driver circuits 10d to 20d in accordance with the control program. The control program is to be pre-created and preloaded into the control apparatus 100. The control program is to allow timely and appropriate actions of the many actuators 10 to 20 as shown in FIG. 2. Such a control program cannot be easily created. For a machine including actuators with different control schemes, such as servo- and sequence-controlled actuators, in particular, creating the control program takes a long time. Developing a new automated manufacturing machine 1 thus involves creating the control program that uses a half or more of the development period in the present situation.

### B. Creating Control Program

### B-1. Overview

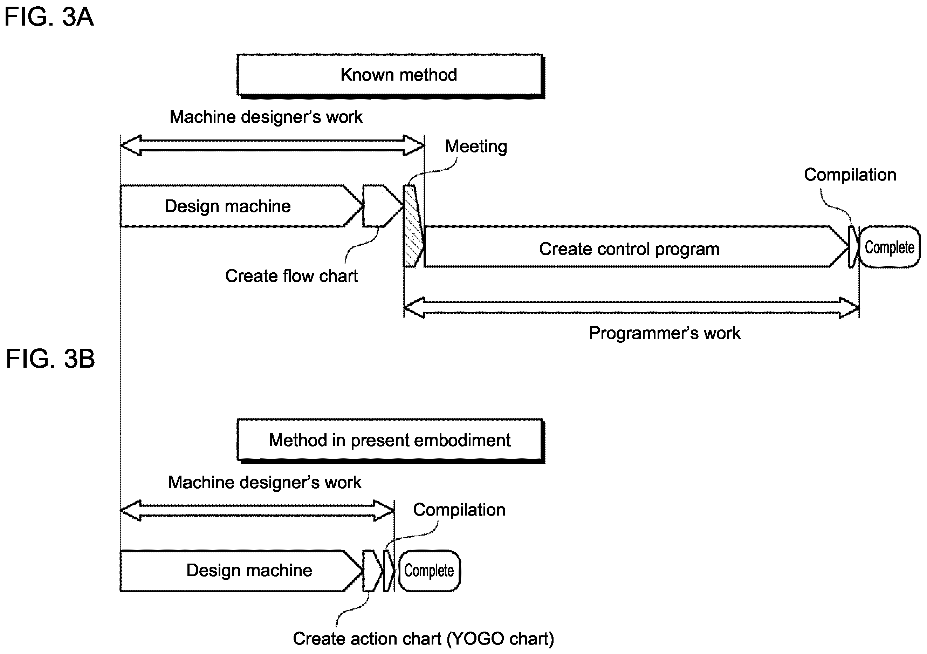

FIGs. 3A and 3B are conceptual diagrams showing general processes for developing a new automated manufacturing machine 1. FIG. 3A shows a known development process. FIG. 3B shows a new development process presented by the inventor of the present application.

In the known development process, as shown in FIG. 3A, the machine designer first determines various functions to be included in the automated manufacturing machine 1, and creates drawings of the automated manufacturing machine 1 with the structure for performing the functions. To create the drawings, the machine designer determines individual features including the types of movable parts to be included, the intended operations of the movable parts, and the details of actuators for achieving the intended operations including the torque, ranges of motion, precision, locations, and number of such actuators. The machine designer then determines the actuators to be incorporated and finally completes the drawings after considering, for example, the ease of incorporation and maintenance of the actuators.

Once the automated manufacturing machine 1 is designed, a control program for controlling the automated manufacturing machine 1 is created. Creating the control program involves an engineer expert in software (in other words, a programmer). Once completing the machine design, the machine designer creates a flowchart describing the actions of the actuators incorporated in the designed automated manufacturing machine 1. The machine designer then has a meeting with the programmer to explain the actions of the actuators. This completes the machine designer's work.

At the meeting with the machine designer, the programmer learns the actions of the actuators incorporated in the automated manufacturing machine 1 by carefully reading the flowchart, drawings, and other materials as appropriate created by the machine designer. The programmer then starts creating the control program for controlling the actions of the various actuators. The programmer typically creates the control program using a human-readable, high-level programming language. The control program written in the high-level programming language is not computer-executable. The programmer converts the control program written in the high-level programming language into a computer-executable control program written in a machine language to complete the final control program. The conversion, or also referred to as compilation, of the control program written in the high-level programming language into the computer-executable control program can be complete in a short time using a dedicated program, or a compiler.

In the known development process, as illustrated in FIG. 3A, creating the control program typically takes about 1.5 to 2.5 times more time than designing the machine. Most processes of designing the machine and creating the control program are difficult to perform in parallel, thus prolonging the development period of the automated manufacturing machine 1. The known development process involves experts with different skills, the machine designer and the programmer. This may also obstruct the development of a new automated manufacturing machine 1.

FIG. 3B shows a process for developing the automated manufacturing machine 1 with a new method presented by the inventor of the present application. The new method is similar to the known method in the machine design. More specifically, the machine designer first determines various functions to be included in the automated manufacturing machine 1, and creates drawings of the automated manufacturing machine 1 with the structure for performing the functions. The machine designer determines the actuators after determining, for example, the actable parts to be included for performing the functions, the actions of the actable parts, and the performance of the actuators for acting the actable parts. The machine designer then finally completes the drawings after considering, for example, the ease of incorporation and maintenance of the actuators.

In the new development process, the machine designer creates an action chart instead of a flowchart after completing the drawings (refer to FIG. 3B). The action chart (described in detail later) describes the actions of the actuators determined by the machine designer designing the machine. The action chart is conceived by the inventor of the present application. This new action chart is hereafter referred to as a YOGO chart. The YOGO chart in the present embodiment corresponds to an action chart in one or more aspects of the present invention.

As described later, the YOGO chart simply describes the actions of the actuators determined by the machine designer designing the machine. The machine designer who has designed the machine can create the YOGO chart in about half the time taken for creating a flowchart (refer to FIG. 3B). The YOGO chart can be read using a dedicated program and converted into a control program executable by a central processing unit (CPU) in the computer. The mechanism for converting the YOGO chart into a control program is also described later. The YOGO chart describing the operation of the automated manufacturing machine 1 can be used to generate the control program written in a machine language. This method can reduce the development period for a new automated manufacturing machine 1 to half or less (typically to about one-third) as compared with the known method, as shown in FIGs. 3A and 3B. The YOGO chart can also be easily created by the machine designer without the work to be performed by the programmer. Various matters that may obstruct the development of a new automated manufacturing machine 1 can thus be mostly eliminated. To change the operation of the automated manufacturing machine 1 or to incorporate an additional actuator to the automated manufacturing machine 1, the YOGO chart can be revised and read with a dedicated program for immediate generation of the control program. This is achieved with the mechanism below.

### B-2. Principle of Automatically Generating Control Program from YOGO Chart

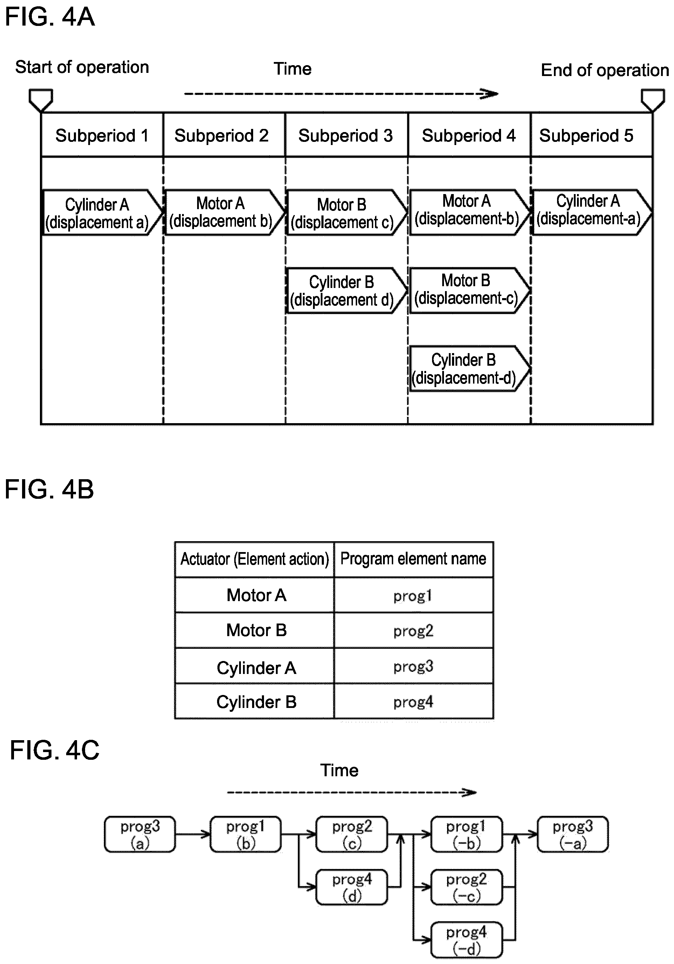

FIGs. 4A to 4C are diagrams showing the principle of automatically generating the control program for the automated manufacturing machine 1 from the action chart (YOGO chart). FIG. 4A is a primitive YOGO chart before undergoing various improvements. The YOGO chart in the present embodiment (described later) is an improvement on the primitive YOGO chart of FIG. 4A. However, the YOGO chart in the present embodiment uses the same principle as the primitive YOGO chart for automatically generating the control program. For easy understanding, the primitive YOGO chart of FIG. 4A is used to describe the principle of automatically generating the control program from the YOGO chart. To avoid complexity, the automated manufacturing machine 1 described herein includes two motors A and B and two cylinders A and B alone as actuators.

As shown in FIG. 4A, the YOGO chart describes the operation of the automated manufacturing machine 1 by combining the element actions of the actuators (the motors A and B and the cylinders A and B in this example). The element action of each actuator herein refers to the motion of the actuator in the direction of the inherent degree of freedom. For a rotary actuator such as a motor, for example, the element action is a rotation motion. For an actuator that moves forward or backward such as a cylinder, the element action is a forward or backward motion. For an actuator that rotates a ball screw with a motor to move a member engaged with the ball screw forward or backward, the element action is either the rotation motion of the motor or the forward or backward motion of the member. The element action of each actuator is thus a simple motion in the direction of the inherent degree of freedom of the actuator by a specified displacement.

The YOGO chart includes multiple subperiods into which the operation period from the start to the end of the operation of the automated manufacturing machine 1 is divided. The element action of each actuator is assigned to any of the subperiods. In the example of FIG. 4A, the operation period of the automated manufacturing machine 1 is divided into five subperiods 1 to 5. The subperiod 1 is assigned with the forward or backward motion of the cylinder A with a displacement (a). The subperiod 2 is assigned with the rotation motion of the motor A with a displacement (b). A subperiod may be assigned with multiple actions. More specifically, the subperiod 3 is assigned with two actions: the rotation motion of the motor B with a displacement (c) and the forward or backward motion of the cylinder B with a displacement (d). The subperiod 4 is assigned with three actions: the rotation motion of the motor A with a displacement (-b), the rotation motion of the motor B with a displacement (-c), and the forward or backward motion of the cylinder B with a displacement (-d). The last subperiod 5 is assigned with the forward or backward motion of the cylinder A with a displacement (-a).

The subperiods are thus assigned with the element actions of the actuators to describe the operation to be performed by the automated manufacturing machine 1 below. The cylinder A is first moved forward or backward with the displacement (a). Upon completion of the action of the cylinder A, the motor A is rotated by the displacement (b). Upon completion of the action of the motor A, the motor B is rotated by the displacement (c), and the cylinder B is moved forward or backward by the displacement (d). Upon completion of the actions of the motor B and the cylinder B, the motor A and the motor B are respectively rotated by the displacement (-a) and the displacement (-c), and the cylinder B is moved forward or backward by the displacement (-d). Upon completion of all the actions of the motor A, the motor B, and the cylinder B, the cylinder A is moved forward or backward by the displacement (-a). Then, the operation of the automated manufacturing machine 1 is complete. The element actions of the actuators incorporated in the automated manufacturing machine 1 can thus be assigned to any of the subperiods to describe the operation of the automated manufacturing machine 1.

As described above, each subperiod is the period for which the assigned actuator is to act, rather than the length of the period. For example, the subperiod 1 has a length for the cylinder A to act. The subperiod 2 has a length for the motor A to act. The subperiod 3 has a length being the longer one of the length for the motor B to act and the length for the cylinder B to act. The subperiods thus typically have different lengths.

The element actions of the actuators assigned to the subperiods are simple actions, such as rotating a motor by a predetermined angle or moving a cylinder forward or backward by a predetermined distance. The element actions of the actuators can thus be performed with small programs (hereafter, program elements) that can be pre-created. The automated manufacturing machine 1 herein incorporates four actuators, the cylinders A and B and the motors A and B. As shown in FIG. 4B, the pre-created program elements may include a program element prog1 to cause the motor A to act, a program element prog2 to cause the motor B to act, a program element prog3 to cause the cylinder A to act, and a program element prog4 to cause the cylinder B to act.

These program elements can be combined together in accordance with the description of the primitive YOGO chart shown in FIG. 4A to automatically generate the control program to cause the automated manufacturing machine 1 to operate. More specifically, as shown in FIG. 4C, the program element prog3 is first activated. Upon completion of the program element prog3, the program element prog1 is activated. Upon completion of the program element prog1, the program elements prog2 and prog4 are activated. The respective displacements for the program element prog3, the program element prog1, the program element prog2, and the program element prog4 are indicated by (a), (b), (c), and (d) in accordance with the indication on the YOGO chart. Upon completion of both the program element prog2 and the program element prog4, the program element prog1, the program element prog2, and the program element prog4 are activated. The respective displacements for these program elements are indicated by (-b), (-c), and (-d) in accordance with the indication on the YOGO chart. Upon completion of all the program elements prog1, prog2, and prog4, the program element prog3 is activated finally. The displacement for the program element prog3 is indicated by (-a) in accordance with the indication on the YOGO chart. Upon completion of the program element prog3, the operation of the automated manufacturing machine 1 described on the YOGO chart of FIG. 4A is complete.

As described above, the operation of the automated manufacturing machine 1 can be described as on the YOGO chart of FIG. 4A to generate the control program shown in FIG. 4C. The control program can cause the automated manufacturing machine 1 to operate. To cause the automated manufacturing machine 1 to operate as intended, the YOGO chart is to be created appropriately. To achieve this, the primitive YOGO chart of FIG. 4A has been improved variously to be the YOGO chart in the present embodiment described below.

### B-3. YOGO Chart

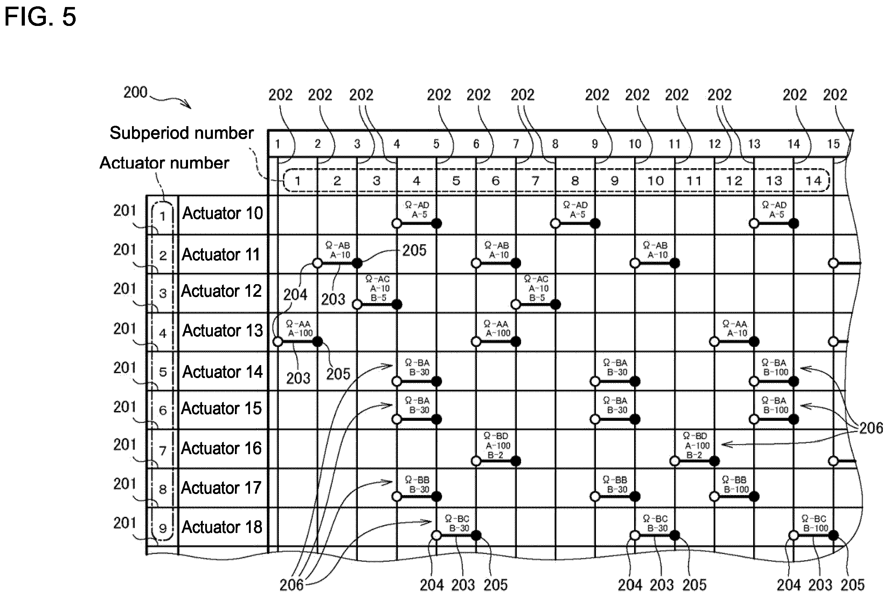

FIG. 5 schematically shows a YOGO chart 200 in the present embodiment. FIG. 5 shows a part (the upper left corner) of the YOGO chart 200 to avoid scaling down and showing the entire chart being unreadable. As shown in FIG. 5, the YOGO chart 200 is a large table with multiple horizontal lines and multiple vertical lines intersecting with each other. The horizontal lines of the multiple intersecting lines are referred to as separation lines 201, and the vertical lines are referred to as trigger lines 202.

The trigger lines 202 are given serial numbers starting with number 1. In the example of FIG. 5, the trigger lines 202 have their serial numbers written in the top field of the YOGO chart 200. Each area defined by adjacent trigger lines 202 corresponds to the subperiod described above with reference to FIGs. 4A.to 4C. The subperiods are also given serial numbers (hereafter, subperiod numbers) starting with 1. For the YOGO chart 200 of FIG. 5, the trigger lines 202 are drawn in the vertical direction, and thus the subperiods defined by the trigger lines 202 are arranged in the horizontal direction. However, the trigger lines 202 may be drawn in the horizontal direction. In this case, the subperiods are arranged in the vertical direction.

The YOGO chart 200 in the present embodiment is divided into multiple horizontal areas by multiple separation lines 201. The horizontal areas are given serial numbers (hereafter, actuator numbers) starting with number 1. Each actuator incorporated in the automated manufacturing machine 1 is assigned to any one of the areas. In the example of FIG. 5, the actuator 10 (refer to FIG. 2) is assigned to the area with the actuator number 1. The actuator 11 (refer to FIG. 2) is assigned to the area with the actuator number 2. The actuator 12 (refer to FIG. 2) is assigned to the area with the actuator number 3. The actuator 13 (refer to FIG. 2) is assigned to the area with the actuator number 4. The automated manufacturing machine 1 in the present embodiment incorporates the eleven actuators 10 to 20 each assigned with a horizontal area.

The element action of each of the actuators 10 to 20 is written at an appropriate position in the horizontal area assigned with the actuator. To cause the actuator 10 to perform its element action in the subperiod 4, for example, an element action 206 to be performed by the actuator 10 is written at the coordinate position of the square identified by the subperiod number 4 in the horizontal area with the actuator number 1 on the YOGO chart 200. To cause the actuator 10 to perform its element action in the subperiod 4 and the subperiod 8,each of the element actions 206 to be performed by the actuator 10 is written at the coordinate position of the square identified by the subperiod number 4 in the horizontal area with the actuator number 1, and at the coordinate position of the square identified by the subperiod number 8 in the same horizontal area. The element action 206 of the actuator 10 is thus written in the horizontal area with the actuator number 1 on the YOGO chart 200. The element action 206 of the actuator 11 is written on the horizontal area with the actuator number 2. In this manner, the element action 206 of each of the actuators 10 to 20 is written in the horizontal area assigned with the actuator on the YOGO chart 200. The YOGO chart 200 in the present embodiment describes the element actions in this manner for the reasons below.

First, the primitive YOGO chart of FIG. 4A will be described. The primitive YOGO chart includes the actions of multiple actuators in an unorganized manner, and may thus disable the engineer from, for example, immediately obtaining the next subperiod in which the cylinder A acting in the subperiod 1 is to act subsequently. From this chart, the engineer may have difficulty in picturing the actions of the actuators and in determining the number of times each actuator acts. This may cause the engineer to overlook any actuator yet to return to its original position or any actuator with its action undescribed.

The YOGO chart 200 in the present embodiment, in contrast, defines separate areas for the respective actuators, and the action of each actuator is described in the corresponding horizontal area, as shown in FIG. 5. The YOGO chart 200 thus allows the engineer to visually determine an actuator to act and a subperiod for the action easily and also to easily obtain the number of times each actuator acts. The engineer can thus easily notice any actuator yet to return to its original position or any actuator with its action undescribed. The YOGO chart 200 can thus be easily created to allow the automated manufacturing machine 1 to operate as intended.

As described later, the YOGO chart 200 can also describe the actions of devices other than the actuators. Such devices are also each assigned with a horizontal area.

The YOGO chart 200 in the present embodiment describes the element actions as described below. In one example, the element action 206 of the actuator 13 that acts first on the YOGO chart 200 of FIG. 5 will now be described. The actuator 13, which acts first, corresponds to the actuator number 4 and the subperiod number 1. The element action 206 is thus written at the coordinate position of the square with the actuator number 4 and the subperiod number 1 on the YOGO chart 200. The square corresponding to the coordinate position with the subperiod number 1 is between the number-1 trigger line 202 on the left and the number-2 trigger line 202 on the right. An action line 203 indicating the action of the actuator is thus drawn from the number-1 trigger line 202 to the number-2 trigger line 202. The action line 203 has a start point 204 at the left end (thus on the number-1 trigger line 202) to indicate the start of the action. The action line 203 has an end point 205 at the right end (thus on the number-2 trigger line 202) to indicate the end of the action. In the example of FIG. 5, the action line 203 is a thick solid line, the start point 204 is an outlined circle, and the end point 205 is a solid circle.

The element action 206 to be performed by the actuator is written above the action line 203. In the example of FIG. 5, the element action 206 (Q-AA) is written for the element action with the actuator number 4 and the subperiod number 1. As described later, the element action 206 is associated with the program element executable by the computer to cause the actuator to perform the element action. The element action 206 written above the action line 203 can be used to identify the program element executable by the computer. The actuator number at the coordinate position with the action line 203 and the element action 206 can be used to identify the actuator to act using the program element. The subperiod number at the coordinate position can be used to identify the subperiod for which the actuator is to act.

The element action can have a parameter to be specified to define the detailed action. The parameter may be, for example, the rotation speed, the movement speed, or the acting time. In the example of FIG. 5, the element action 206 (Q-AA) with a mark A-100 below is at the coordinate position with the actuator number 4 and the subperiod number 1. The mark A-100 indicates the parameter specified for the element action 206 (Ω-AA). Multiple parameters may be specified for an element action to specify the action in more detail. For the actuator being a motor, for example, the rotation speed and the rotation angle may be specified. For the actuator being a linear motor, the movement speed and the movement distance may be specified. To allow multiple parameters to be specified, each parameter is prefixed with an alphabet representing the type of parameter. The condition to be specified by the parameter is not limited to a numerical value indicating the speed or position, but may be the degree of acceleration or deceleration of the motor or the drive pattern indicating the manner of acceleration or deceleration.

The actuator may be, for example, an air cylinder that performs a simple action such as moving forward or backward to the stroke limit. In this case, the element action to be performed with the program element may be to simply move forward or backward until a predetermined time elapses or until the contact switch is turned on. Such a simple action can be defined without any parameter, and the element action 206 is written above the action line 203 without any parameter.

On the YOGO chart of FIG. 5, the element action 206 of the actuator 11 to act second is similarly written. This will now be briefly described. The element action 206, which is to be performed by the actuator 11 in the second subperiod, is written at the coordinate position with the actuator number 2 and the subperiod number 2. The action line 203 is thus drawn from the number-2 trigger line 202 on the left to the number-3 trigger line 202 on the right. The action line 203 has the start point 204 at the left end and the end point 205 at the right end. The element action 206 (Q-AB in the example) to be performed by the actuator 11 is written above the action line 203 with a parameter (A-10 in this example) written below the element action 206. The chart thus describes causing the actuator 11 to perform the element action 206 (Q-AB) in the second subperiod with the parameter (A-10) specified for the actuator 11.

The basic method for describing the operation of the automated manufacturing machine 1 using the YOGO chart 200 has been described above. To describe the operation of the automated manufacturing machine 1 more easily, various description methods are available for the YOGO chart 200.

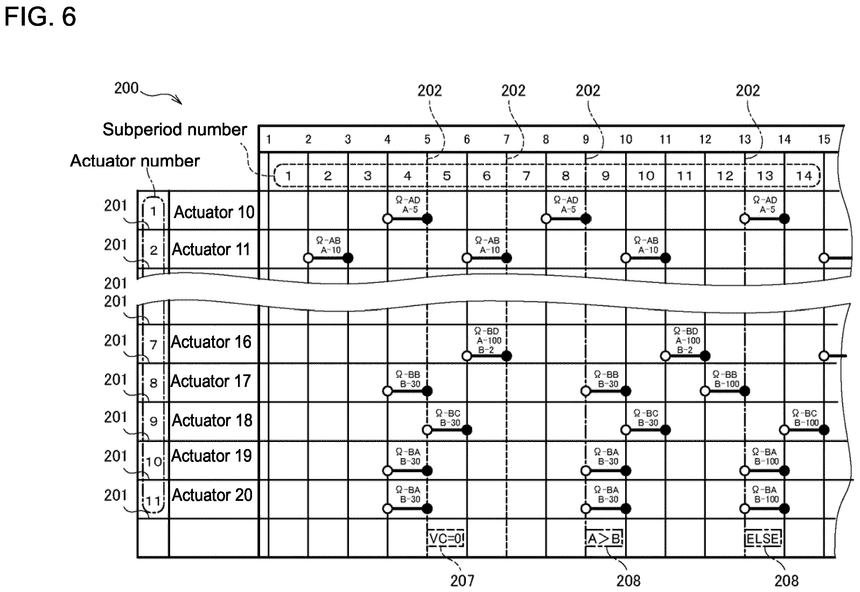

For example, the YOGO chart of FIG. 6 includes the number-5 trigger line 202 and the number-7 trigger line 202 being dashed lines, unlike in FIG. 5 referred to above. This indicates repetition of the actions assigned to the subperiods between the number-5 trigger line 202 and the number-7 trigger line 202 (specifically, the subperiods with the subperiod numbers 5 and 6). The condition for repetition is written in a dashed line box 208 at the lower part of the number-5 trigger line 202 with the lower number of the two trigger lines 202. In the example of FIG. 6, the actions assigned to the subperiods from the number-5 trigger line 202 to the number-7 trigger line 202 are repeated until a variable VC reaches zero. In response to the condition for repetition (variable VC = 0 in this example) written at the lower part of the number-5 trigger line 202 being satisfied, the actions with their start points 204 on the number-7 trigger line 202 (or in other words, the actions assigned to the subperiod with the subperiod number 7) start.

The YOGO chart of FIG. 6 includes the number-9 trigger line 202 and the number-13 trigger line 202 being dot-and-dash lines, unlike in FIG. 5 referred to above. This indicates conditional branching. Boxes 208 at the lower part of the number-9 trigger line 202 and the number-13 trigger line 202 are also in dot-and-dash lines to indicate branch conditions. In the example of FIG. 6, A > B is written in the box 208 at the lower part of the number-9 trigger line 202, and ELSE is written in the box 208 at the lower part of the number-13 trigger line 202. This indicates that, in response to A > B being satisfied, the actions with their start points 204 on the number-9 trigger line 202 (or in other words, the actions assigned to the subperiod with the subperiod number 9) start, and, in response to A > B not being satisfied (ELSE), the actions with their start points 204 on the number-13 trigger line 202 (or in other words, the actions assigned to the subperiod with the subperiod number 13) start.

The automated manufacturing machine 1 may place a predetermined time interval before allowing an actuator to start acting, or may determine, for example, whether a predetermined number of components have been supplied before allowing an actuator to start acting. The automated manufacturing machine 1 may also indicate the start of the actions of the actuators by outputting sound (including a sound effect) to alert nearby workers or by turning on or flashing an illuminator for a predetermined duration. Such actions, including measuring a predetermined time using a timer, counting to a predetermined number using a counter, outputting sound from a speaker, and turning on or flashing an illuminator, are not performed by the actuators but may be defined to be equivalent to the element actions. The YOGO chart 200 can also describe the actions that are not performed by the actuators but are defined to be equivalent to the element actions.

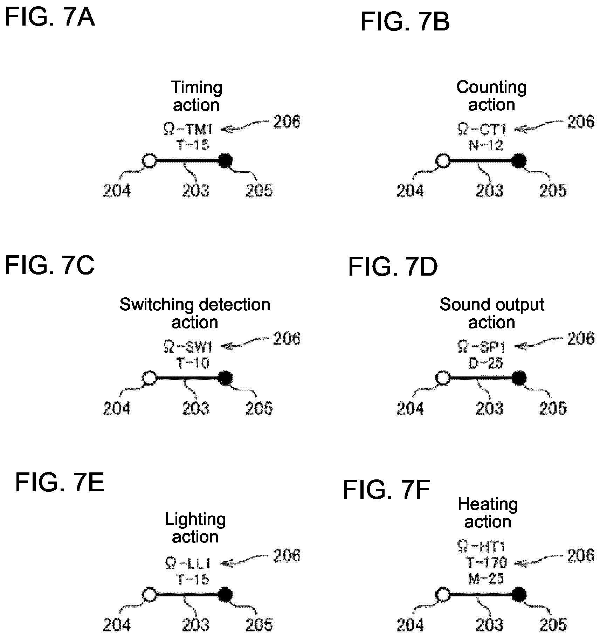

FIGs. 7A to 7F are diagrams showing example descriptions of actions defined to be equivalent to the element actions described on the YOGO chart 200. FIG. 7A describes an action of measuring a predetermined time (timing action). On the YOGO chart 200, the timing action to be performed with the timer is also described using the action line 203 having the start point 204 at the left end and the end point 205 at the right end, with the element action 206 (Ω-TM1 in this example) written above the action line 203 to indicate the timing with the timer. The elapsed time to be measured with the timer can be specified by a parameter.

FIG. 7B describes an action of counting a predetermined number or times (counting action). The counting action to be performed with the counter is also described using the action line 203 having the start point 204 at the left end and the end point 205 at the right end, with the element action 206 (Ω-CT1 in this example) written above the action line 203 to indicate the counting action to be performed with the counter. The count value for the counter can be specified by a parameter.

FIG. 7C describes an action of monitoring the state of a switch for a predetermined duration and detecting switching (switching detection action). The switch herein may be an operation button, a proximity switch, or an optical switch such as a photocoupler. The switching detection action is also described using the action line 203 having the start point 204 at the left end and the end point 205 at the right end, with the element action 206 (Ω-SW1 in this example) written above the action line 203 to indicate the switching detection action. The duration of monitoring the state of the switch can be specified by a parameter.

FIG. 7D describes an action of outputting sound from a speaker (sound output action). On the YOGO chart 200, the sound output action to be performed with the speaker is also described using the action line 203 having the start point 204 at the left end and the end point 205 at the right end, with the element action 206 (Ω-SP1 in this example) written above the action line 203 to indicate the drive of the speaker. The sound data to be output from the speaker can be specified using a parameter.

FIG. 7E describes a lighting action to be performed with an illuminator. The lighting action to be performed with the illuminator is also described using the action line 203 having the start point 204 at the left end and the end point 205 at the right end, with the element action 206 (Ω-LL1 in this example) written above the action line 203 to indicate the lighting action to be performed with the illuminator. The manner of lighting (e.g., whether the illuminator is steadily on or flashing) can be specified using a parameter.

FIG. 7F describes an action of heating an object with a heater or cooking materials. The heating action to be performed with the heater is also described using the action line 203 having the start point 204 at the left end and the end point 205 at the right end, with the element action 206 (Ω-HT1 in this example) written above the action line 203 to indicate the heating action to be performed with the heater. The heating temperature and the heating time can be specified by parameters.

As described above, the YOGO chart in the present embodiment includes the action lines 203, the start points 204, the end points 205, the element actions 206, and optional parameters at the coordinate positions of the squares identified by the actuator numbers and the subperiod numbers. The YOGO chart describes the operation of the automated manufacturing machine 1 using the element actions of all the actuators 10 to 20 incorporated in the automated manufacturing machine 1 as described above. The control apparatus 100 for the automated manufacturing machine generates the control program from the above YOGO chart to control the operation of the automated manufacturing machine 1.

### C. Control Apparatus 100 for Automated Manufacturing Machine According to Present Embodiment

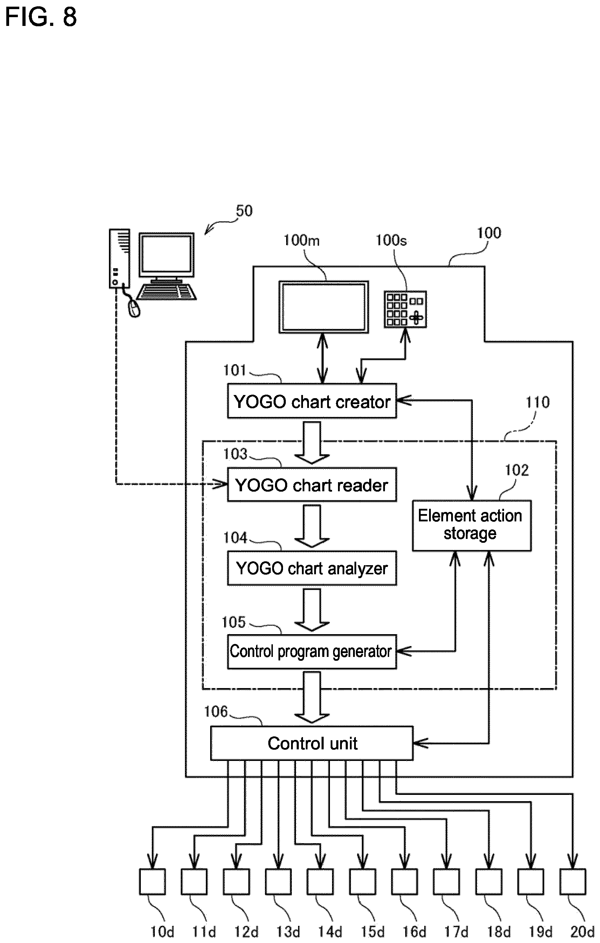

FIG. 8 is a functional block diagram of the control apparatus 100 for the automated manufacturing machine according to the present embodiment. As shown in FIG. 8, the control apparatus 100 for the automated manufacturing machine according to the present embodiment includes a YOGO chart creator 101, an element action storage 102, a YOGO chart reader 103, a YOGO chart analyzer 104, a control program generator 105, and a control unit 106. These units are conceptual representations of multiple functions to be included in the control apparatus 100 to create the YOGO chart 200 and to generate the control program from the YOGO chart 200 to control the operation of the automated manufacturing machine 1. The control apparatus 100 thus may not be a combination of components corresponding to these units. These units can be implemented in various forms, such as a program executable by a central processing unit (CPU), an electronic circuit combining integrated circuit (IC) chips and large-scale integrated (LSI) circuits, or a combination of these.

The YOGO chart creator 101 is connected to, for example, a monitor screen 100m and operation buttons 100s. A mechanical engineer with sufficient knowledge about the automated manufacturing machine 1 creates the YOGO chart 200 as illustrated in FIG. 5 by operating the operation buttons 100s while viewing the monitor screen 100m. As described above, the YOGO chart 200 describes the operation of the automated manufacturing machine 1 by assigning the element actions of the multiple actuators incorporated in the automated manufacturing machine 1 to any of the subperiods. The machine designer sufficiently considers appropriate combinations of the element actions of the actuators to achieve the operation of the automated manufacturing machine 1 when designing the machine. The machine designer can thus easily create the YOGO chart 200 describing the operation of the automated manufacturing machine 1. The YOGO chart 200 can also be created easily by any mechanical engineer with sufficient knowledge about the structure and operation of the automated manufacturing machine 1 other than the designer of the automated manufacturing machine 1.

As described above with reference to FIGs. 5 to 7, the element actions 206 (or the actions equivalent to the element actions) are to be written on the YOGO chart 200. The element action storage 102 stores, in a manner associated with each other, the names of the actuators (or the speakers, illuminators, switches, or other devices) and the element actions 206 to be performed by the actuators or other devices.

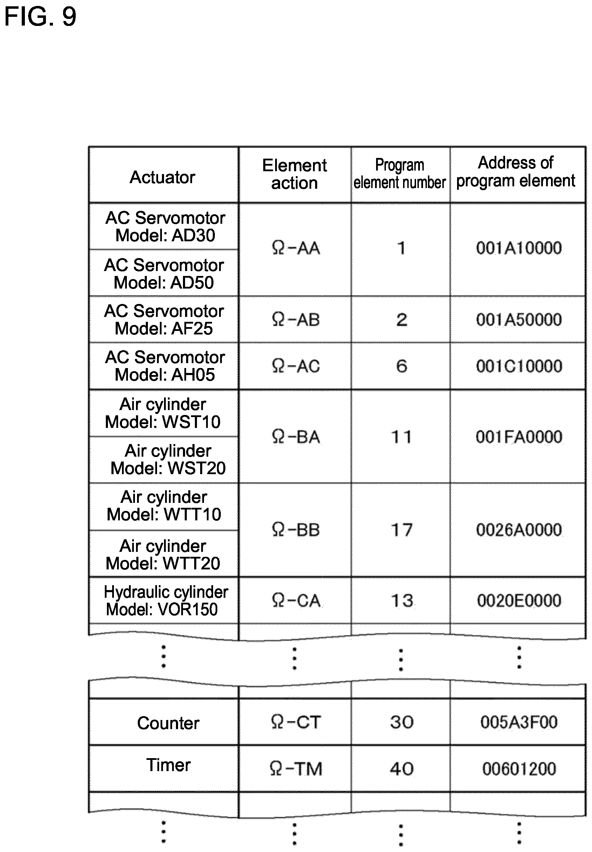

FIG. 9 is a table including the names of the actuators and other devices associated with the element actions 206. The element action storage 102 stores the correspondences. As shown in the figure, the actuators or other devices are stored in a manner associated with the element actions 206 (including the actions equivalent to the element actions such as a timing action) to be performed by the actuators or other devices. For an actuator or another device having multiple types of element actions or other actions to be performed, the element actions 206 to be performed are stored. For each element action 206, the program element number and the start address value of the program element are stored. The program element number herein refers to the number identifying the program element to perform the element action (or the action equivalent to the element action). Each program element is stored in a memory in a format executable by the CPU. The address of the program element in the memory has a start address value that is also stored in the element action storage 102 in a manner associated with the program element.

As shown in FIG. 8, the YOGO chart creator 101 is connected to the element action storage 102. The machine designer (or the mechanical engineer) can refer to the data in FIG. 9 stored in the element action storage 102 for creating the YOGO chart 200. Any mechanical engineer with sufficient knowledge about the automated manufacturing machine 1 sufficiently knows the types of actuators and the manner of acting the actuators. The mechanical engineer can thus identify the element actions 206 from the names of the actuators. The parameters can also be easily specified. The YOGO chart 200 can thus be easily created.

The YOGO chart reader 103 reads the YOGO chart 200 created with the YOGO chart creator 101 and outputs the YOGO chart 200 to the YOGO chart analyzer 104. In the present embodiment, the YOGO chart 200 is created with the control apparatus 100 for the automated manufacturing machine. More specifically, the YOGO chart reader 103 reads the YOGO chart 200 from the YOGO chart creator 101. In some embodiments, the YOGO chart reader 103 may read the YOGO chart 200 created with a computer 50 separate from the control apparatus 100.

The YOGO chart analyzer 104 analyzes the YOGO chart 200 received from the YOGO chart reader 103 to generate intermediate data, and outputs the intermediate data to the control program generator 105. The process for generating the intermediate data from the YOGO chart will be described in detail later.

Upon receiving the intermediate data, the control program generator 105 refers to the correspondences stored in the element action storage 102 to generate the control program from the intermediate data. The process for generating the control program from the intermediate data will be described in detail later. The control program generator 105 then outputs the resultant control program to the control unit 106.

Upon receiving the control program from the control program generator 105, the control unit 106 obtains the program elements stored in a manner associated with the program element numbers in the control program from the element action storage 102. As described above with reference to FIG. 9, the element action storage 102 stores the start address values of the program elements in a manner associated with the program element numbers. The control unit 106 can thus read the program elements corresponding to the program element numbers. The control unit 106 executes the read program elements to control any of the actuators 10 to 20 with the corresponding driver circuits 10d to 20d. This causes the automated manufacturing machine 1 to operate as described on the YOGO chart.

The YOGO chart reader 103 in the present embodiment corresponds to an action chart reader in one or more aspects of the present invention. The YOGO chart reader 103, the YOGO chart analyzer 104, and the control program generator 105 described with reference to FIG. 8 operate in cooperation to generate the control program from the YOGO chart 200. In the control apparatus 100 according to the present embodiment, the YOGO chart reader 103, the YOGO chart analyzer 104, and the control program generator 105 correspond to a control program generation apparatus 110 in one or more aspects of the present invention.

### D. Control Program Generation Process

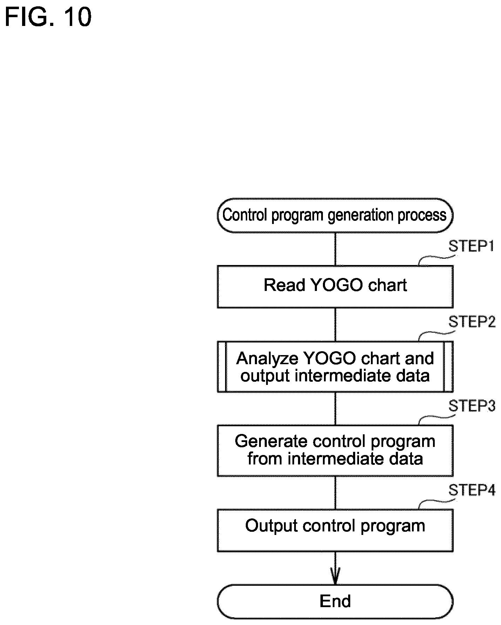

FIG. 10 is a general flowchart of the control program generation process performed by a section corresponding to the control program generation apparatus 110 in the control apparatus 100 according to the present embodiment. In the control program generation process, as shown in the figure, the YOGO chart is read first (STEP 1). In the present embodiment, the YOGO chart with its data to be read is created with the control apparatus 100. In some embodiments, the YOGO chart with its data to be read may be created with another computer 50.

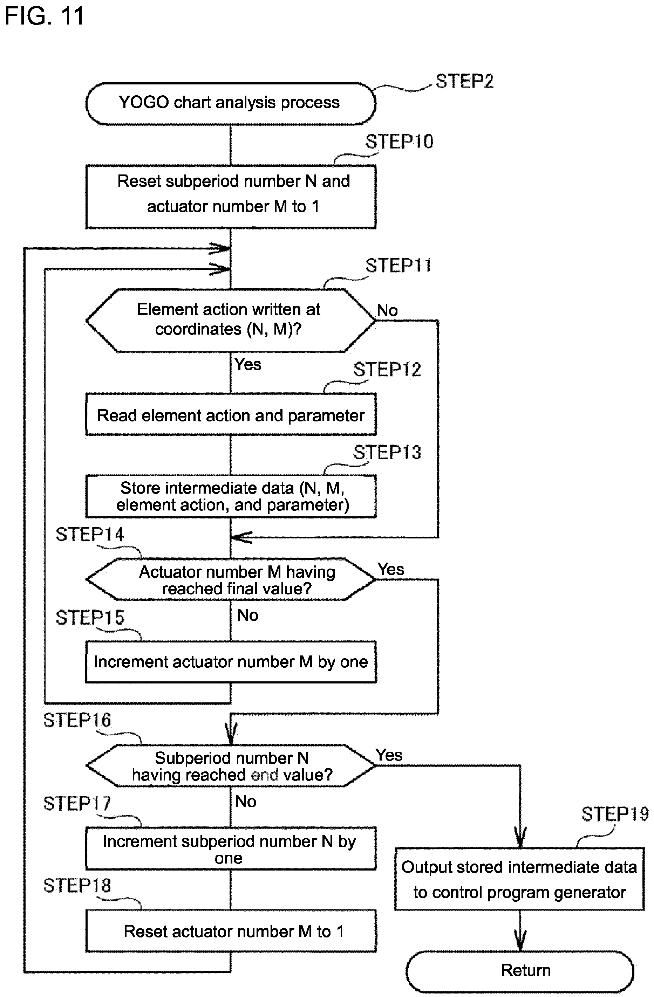

The read YOGO chart is then analyzed to output intermediate data (STEP 2). FIG. 11 is a flowchart of the process (YOGO chart analysis process) for analyzing the YOGO chart and outputting the intermediate data performed by the control apparatus 100 according to the present embodiment. This process is performed by the YOGO chart analyzer 104 shown in FIG. 8.

At the start of the YOGO chart analysis process, as shown in FIG. 11, the subperiod number N and the actuator number M are each reset to 1 (STEP 10). The determination is performed as to whether an element action is written at the coordinates (N, M) on the YOGO chart 200 (STEP 11). The coordinates (N, M) on the YOGO chart 200 herein refer to the coordinate position of the square identified by the combination of the subperiod number N and the actuator number M on the YOGO chart 200. Immediately after STEP 10 in which the subperiod number N and the actuator number M are reset, N and M are both 1. Thus, the determination is performed as to whether an element action is written at the coordinates (1, 1) on the YOGO chart 200.

For the YOGO chart 200 of FIG. 5, no element action is written at the coordinates (1, 1), and the determination result in STEP 11 is negative. The determination is then performed as to whether the actuator number M has reached the final value (STEP 14). The final value for the actuator number M is 11, with the eleven actuators 10 to 20 being incorporated in the automated manufacturing machine 1 in the present embodiment. For the determination in STEP 14 as to whether an element action is written at the coordinates (1, 1), the determination result is negative. The actuator number M is then incremented by one (STEP 15). The actuator number M after the increment is used to determine again whether an element action is written at the coordinate position (N, M) (STEP 11).

For every increment, by one, of the actuator number M with the subperiod number N fixed to 1, the determination is performed as to whether an element action is written at the coordinates (1, M) in the above manner. In response to the coordinates (1, M) with a written element action being reached, the determination result in STEP 11 is affirmative.

In response to the determination result in STEP 11 being affirmative, the element action 206 and any parameter written at the coordinates are read (STEP 12). For the YOGO chart 200 of FIG. 5, in response to the coordinates (1, 4) being reached, the determination result in STEP 11 is affirmative, and the element action 206 (Q-AA) and the parameter A-100 are read.

The intermediate data (N, M, the element action, and the parameter) is then stored in the memory (STEP 13). For the coordinates (1, 4) on the YOGO chart 200 of FIG. 5, the intermediate data (1, 4, Q-AA, A-100) is stored in the memory. This intermediate data indicates the element action Q-AA written at the position identified by the subperiod number 1 and the actuator number M being 4 on the YOGO chart 200, with the parameter A-100 set for the element action.

The intermediate data read from the YOGO chart 200 is stored in the memory (STEP 13). The determination is then performed as to whether the actuator number M has reached the final value (11 in this example) (STEP 14). In response to the actuator number M being yet to reach the final value (no in STEP 14), the actuator number M is incremented by one (STEP 15), and the process returns to STEP 11 to determine again whether an element action is written at the coordinates (N, M) on the YOGO chart 200.

In response to the actuator number M reaching the final value (yes in STEP 14), the determination is performed as to whether the subperiod number N has reached an end value (STEP 16). For the YOGO chart 200 describing the operation of the automated manufacturing machine 1 using 100 subperiods, for example, the subperiod number N has the end value of 100.

In response to the subperiod number N being yet to reach the end value (no in STEP 16), the subperiod number N is incremented by one (STEP 17), the actuator number M is reset to 1 (STEP 18), and the process returns to STEP 11 to determine again whether an element action is written at the coordinates (N, M) on the YOGO chart 200. More specifically, the determination is performed for the subperiod with the subperiod number N being 1 from top to bottom on the YOGO chart 200 (refer to FIG. 5), then for the subperiod with the subperiod number N being 2 from top, and then for the subperiod with the subperiod number N being 3. In this manner, the element actions and parameters written on the YOGO chart 200 are read in sequence from the subperiod with a lower subperiod number N to the subperiod with a higher subperiod number N. The read element actions and parameters are stored as intermediate data in the memory.

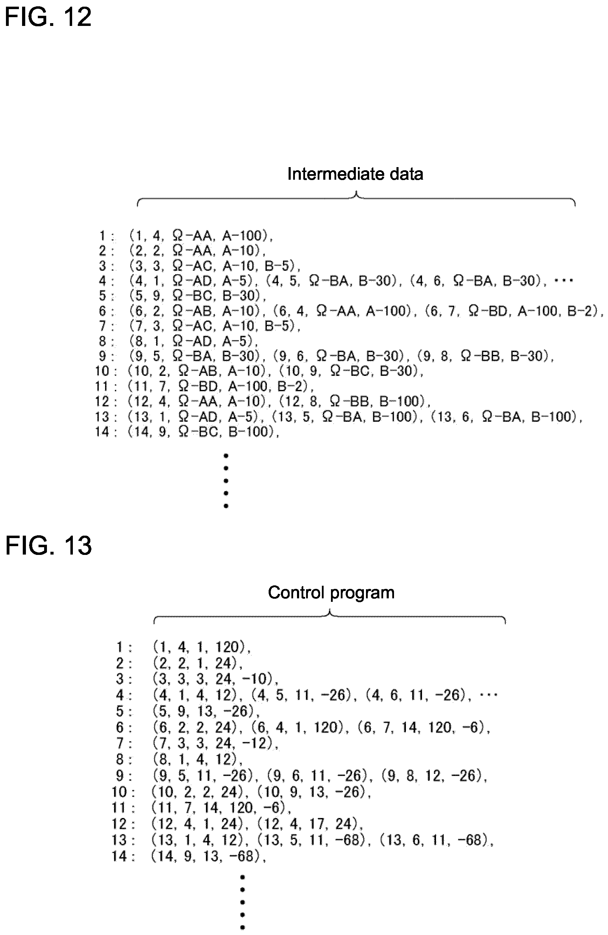

In response to the subperiod number N finally being determined to have reached the end value (yes in STEP 16) after the repeated processes above, the element actions written on the YOGO chart 200 have been all read. The intermediate data stored in the memory is then read and output to the control program generator 105 (STEP 19). FIG. 12 illustrates the intermediate data resulting from analyzing the YOGO chart 200 of FIG. 5. In response to the intermediate data being output, the YOGO chart analysis process in FIG. 11 is complete, and the process returns to the control program generation process in FIG. 10.

In the control program generation process shown in FIG. 10, the control program is generated based on the intermediate data obtained as described above (STEP 3). FIG. 13 shows the control program generated from the intermediate data illustrated in FIG. 12. The comparison between the intermediate data in FIG. 12 and the control program in FIG. 13 shows that the control program corresponds to the intermediate data but includes numerical values that have replaced the element actions 206 and parameters in the intermediate data. More specifically, the element actions 206 in the intermediate data are replaced with the program element numbers for performing the element actions. The parameters in the intermediate data are replaced with the specific numerical values represented by the parameters. The control program results from such replacement.

The element actions 206 and the parameters in the intermediate data are replaced with numerical values by the control program generator 105 in FIG. 8 referring to the element action storage 102. As described above with reference to FIG. 9, the element action storage 102 stores the element actions in a manner associated with the program element numbers for performing the element actions. The element action storage 102 also stores the correspondences between the parameters and the specific numerical values (not shown). The control program generator 105 replaces the element actions 206 and the parameters in the intermediate data with the program element numbers and the specific numerical values. The control program generator 105 thus converts the intermediate data into the control program executable by the control unit 106.

The control apparatus 100 according to the present embodiment refers to the element action storage 102 to replace the element actions 206 and the parameters with the program element numbers and the specific numerical values. The element actions 206 and the parameters can thus be written on the YOGO chart in the form easy to understand for humans. This avoids erroneous element actions 206 or parameters written on the YOGO chart that may cause an unintended operation of the automated manufacturing machine 1.

In response to the control program being generated from the intermediate data (STEP 3 in FIG. 10), the generated control program is output to the control unit 106 (STEP 4), and the control program generation process in FIG. 10 is complete.

As shown in FIG. 13, the control program in the present embodiment is a collection of sets of data (hereafter, datasets) each including the subperiod number N, the actuator number M, the program element number, and the parameter value listed in this order. The first data in the dataset representing the subperiod number N is referred to as a first element. The second data representing the actuator number M is referred to as a second element. The third data representing the program element number is referred to as a third element.

### E. Operation Control Process

The control program generated with the above control program generation process is simply a series of multiple datasets as illustrated in FIG. 13. The control unit 106 in the control apparatus 100 uses such a control program to control the actions of the actuators 10 to 20 in the automated manufacturing machine as described below.

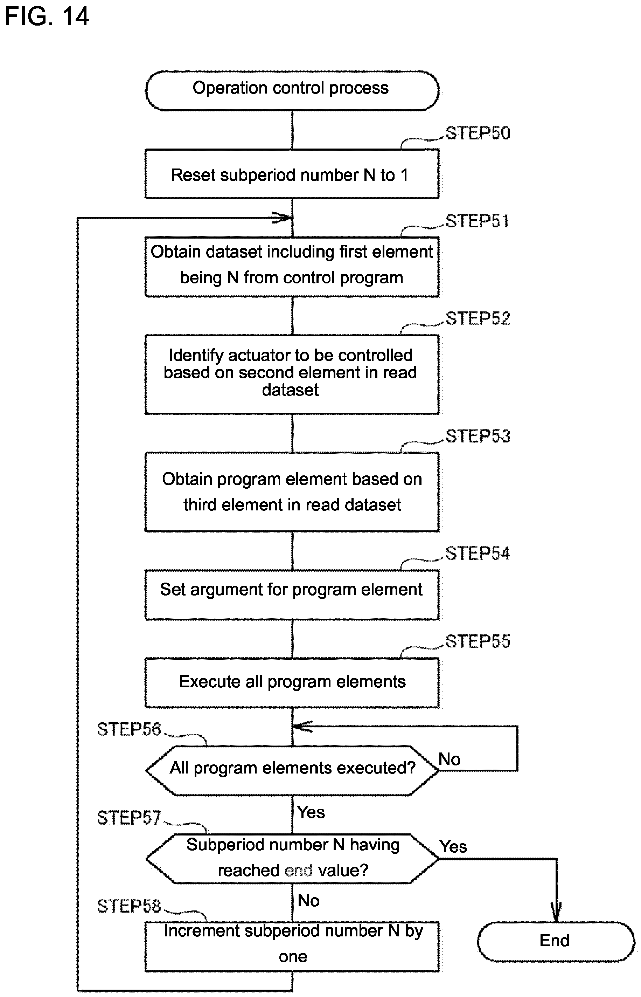

FIG. 14 is a flowchart of the operation control process for controlling the operation of the automated manufacturing machine 1 in accordance with the control program performed by the control unit 106 in the control apparatus. At the start of the operation control process, as shown in FIG. 14, the subperiod number N is reset to 1 (STEP 50). The dataset including the first element being N is then obtained from the control program (STEP 51). Immediately after the start of the operation control process, the subperiod number N is set to 1. The dataset (1, 4, 1, 120) is thus read from the control program illustrated in FIG. 13.

The actuator to be controlled is then identified based on the value of the second element in the read dataset (STEP 52). For the dataset read in STEP 51 being (1, 4, 1, 120), the second element has the value of 4, indicating that the actuator with the actuator number M being 4 is to be controlled. For multiple datasets being read in STEP 51, the respective actuators to be controlled are identified based on the values of the second elements in the datasets.

The program element to cause the actuator to perform the element action is then obtained based on the value of the third element in the read dataset (STEP 53). For the dataset read in STEP 51 being (1, 4, 1, 120), the third element has the value 1, indicating that the program element with the program element number 1 is to be used for the element action. The program element executable by the CPU is read using the start address value corresponding to the program element number. The start address value is obtained by reference to the correspondences (refer to FIG. 9) stored in the element action storage 102. For multiple datasets being read in STEP 51, the respective program elements are read based on the values of the third elements in the datasets.

The dataset may include one or more elements other than the first to third elements as the parameter(s) to be specified for the program element. Any such element(s) are read and set as argument(s) for the program element (STEP 54).

The processes of STEP 51 to STEP 54 cause each actuator to be ready to perform the element action written in a subperiod (the subperiod with the subperiod number N being 1 immediately after the start of the operation control process) on the YOGO chart 200. More specifically, the actuator to be controlled is identified (STEP 52), the program element to be used for the control is obtained (STEP 53), and the argument is set for the program element (STEP 54). The program element is then executed (STEP 55). For example, in the case of the actuator being a servomotor and the element action being a 180-degree forward rotation of the motor, the program element is executed to repeatedly drive the motor on a predetermined control cycle while detecting the rotation angle of the motor until the rotation angle reaches 180 degrees. Multiple program elements may be executed in parallel.

The determination is then performed as to whether all the program elements have been executed (STEP 56). For multiple program elements executed in STEP 55, the program elements may not be complete at the same time. Thus, the determination is performed as to whether all the program elements have been executed. For a single program element executed in STEP 55, the determination is performed as to whether the single program element has been executed.

In response to any program element remaining to be executed, the determination result in STEP 56 is negative, and the same determination (STEP 56) is repeated. This places the processing in a wait state until all the program elements are executed. In response to all the program elements being complete (yes in STEP 56), the determination is performed as to whether the subperiod number N has reached the end value (STEP 57). For the YOGO chart 200 describing the operation of the automated manufacturing machine 1 using 100 subperiods, for example, the determination is performed as to whether the subperiod number N has reached 100.

In response to the subperiod number N being yet to reach the end value (no in STEP 57), the subperiod number N is incremented by one (STEP 58). The process then returns to STEP 51 to read, from the control program, a dataset including the first element being a new subperiod number N. The read dataset then undergoes the above processes of STEP 52 to STEP 55. Thus, the target subperiod is shifted to the new subperiod next to the subperiod for which element actions have been performed. For the new subperiod, all the written element actions are performed. In response to all the element actions in the new subperiod being complete and the determination result in STEP 56 being affirmative, the determination is then performed as to whether the subperiod number N for the subperiod has reached the end value (STEP 57). In response to the subperiod number N being yet to reach the end value (no in STEP 57), the subperiod number N is incremented by one (STEP 58), and the process returns to STEP 51 to repeat the above processes STEP 51 to STEP 57 for a new subperiod number N.

In the operation control process in FIG. 14, selecting one subperiod and performing the element actions written in the selected subperiod are repeatedly performed from the first subperiod (the subperiod with the subperiod number N being 1) to the last subperiod (the subperiod with the subperiod number N being the end value) on the YOGO chart 200. In response to the element actions in the last subperiod being complete, the determination result in STEP 57 is affirmative, and the operation control process is complete.

As described in detail above, the control apparatus 100 for the automated manufacturing machine according to the present embodiment can produce the YOGO chart 200 describing the operation of the automated manufacturing machine 1. The control apparatus 100 can use the YOGO chart 200 to automatically generate the control program to cause the automated manufacturing machine to operate. The YOGO chart 200 can be easily created by anyone with sufficient knowledge about the structure and operation of the automated manufacturing machine 1 without programming knowledge. This eliminates the work of a programmer creating the control program. This greatly reduces the time taken to develop a new automated manufacturing machine 1 (to half or less). Introducing new automated manufacturing machines to manufacturing sites is thus easier, achieving labor savings in industry.

The control apparatus 100 for the automated manufacturing machine according to the present embodiment has been described.

In the control apparatus 100 for the automated manufacturing machine in the above embodiment, for example, the control program generator 105 and the control unit 106 both refer to the element action storage 102 as shown in FIG. 8. The element action storage 102 in the above embodiment stores the correspondences to be referred to by the control program generator 105 for generating the control program. More specifically, the element action storage 102 stores the correspondences between the element actions 206 (and the parameters) and the program element numbers (and the specific numerical values). The element action storage 102 also stores the correspondences to be referred to by the control unit 106 for generating the control program. More specifically, the element action storage 102 stores the correspondences between the program element numbers and the start address values of the program elements. Such correspondences stored in the element action storage 102 may be separated into the correspondences to be referred to by the control program generator 105 and the correspondences to be referred to by the control unit 106. The correspondences to be referred to by the control unit 106 may be stored in a storage other than the element action storage 102.

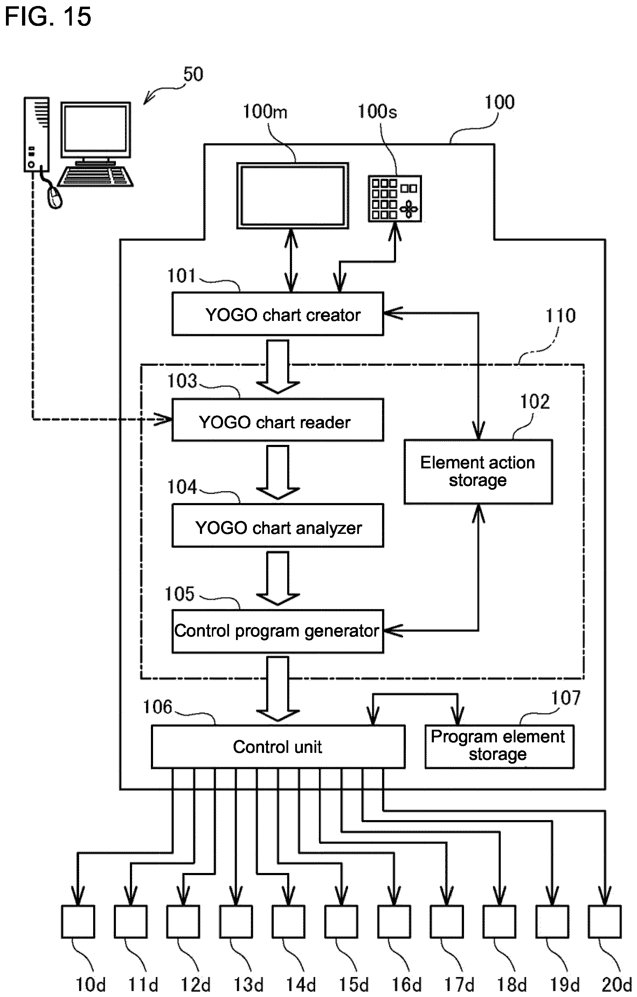

FIG. 15 is a diagram of a control apparatus 100 for an automated manufacturing machine according to a modification. **In** this control apparatus 100, the correspondences to be referred to by the control program generator 105 are separated from the correspondences to be referred to by the control unit 106. The control program generator 105 and the control unit 106 thus refer to different storages. Unlike the control apparatus 100 according to the above embodiment in FIG. 8, the control apparatus 100 according to the modification in FIG. 15 includes the control unit 106 that refers to a program element storage 107 instead of the element action storage 102. The program element storage 107 stores the correspondences between the program element numbers and the start address values of the program elements among the correspondences described above with reference to FIG. 9. The element action storage 102 in the modification accordingly eliminates the correspondences between the program element numbers and the start address values. In the control apparatus 100 according to the modification, the control unit 106 refers to the program element storage 107 and reads the program elements for executing the control program.

For clarity, the correspondences stored in the element action storage 102 in the modification will further be described. In the control apparatus 100 according to the above embodiment, as shown in FIG. 9, the element action storage 102 stores the correspondences between the start address values of the program elements and the element actions 206. In the modification, however, the element action storage 102 stores the correspondences between the element actions 206 and the program element numbers without the correspondences between the element actions 206 and the start address values of the program elements. The program elements to perform the element actions cannot be directly read from the element action storage 102 in the modification. For the program element numbers being identified, however, the corresponding program elements can be identified. The element action storage 102 in the modification thus substantially stores the correspondences between the element actions 206 and the program elements.

The control apparatus 100 according to the above embodiment has the functions of creating the YOGO chart 200 and generating the control program from the YOGO chart 200 (corresponding to the YOGO chart creator 101, the element action storage 102, the YOGO chart reader 103, the YOGO chart analyzer 104, and the control program generator 105 in FIG. 8), as well as the function of performing control in accordance with the control program (corresponding to the control unit 106 in FIG. 8). However, these functions may be performed by multiple devices each responsible for part of the functions. Such devices may be combined to function as the control apparatus 100 as a whole.

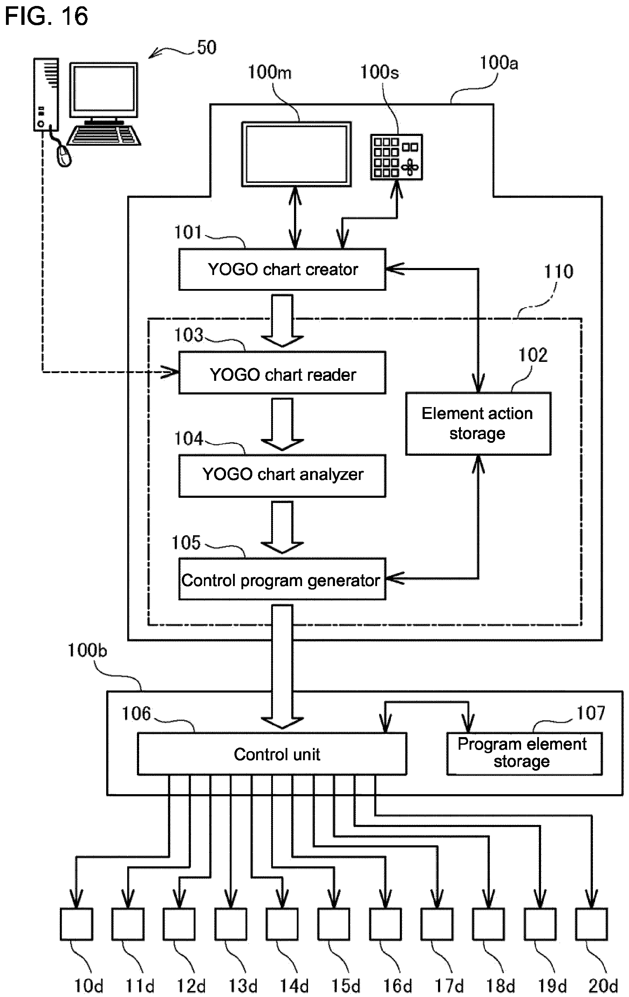

As shown in FIG. 16, for example, the control apparatus 100 for the automated manufacturing machine may include a YOGO chart processor 100a and a controller 100b. The YOGO chart processor 100a may incorporate a series of functions from the creation of the YOGO chart 200 to the generation of the control program (specifically, the YOGO chart creator 101, the element action storage 102, the YOGO chart reader 103, the YOGO chart analyzer 104, and the control program generator 105). The controller 100b may incorporate the function of performing control in accordance with the control program (specifically, the control unit 106 and the program element storage 107).

The YOGO chart processor 100a can be installed in an office room to be used to create the YOGO chart 200 and generate the control program. The controller 100b can be installed near the automated manufacturing machine 1 to be used to read the generated control program to cause the automated manufacturing machine 1 to operate. In the example of FIG. 16, the YOGO chart processor 100a corresponds to a control program generation apparatus in one or more aspects of the present invention.

In the above embodiment, the YOGO chart 200 describes the element actions (or the actions equivalent to the element actions). In some embodiments, the components that perform complicated actions with multiple degrees of freedom may be purchased to be used as actuators in the automated manufacturing machine 1. The components may be controlled to perform predetermined actions. In this case, the predetermined actions to be performed by the components may be written on the YOGO chart 200 as the element actions 206. In this case as well, the control apparatus 100 for the automated manufacturing machine can pre-create the program elements corresponding to the element actions 206 and automatically generate the control program using the program elements.

### REFERENCE SIGNS LIST

1 automated manufacturing machine
2 rail
3 conveyor unit
3a holder shaft
3b chuck
4 machining unit
10 to 20 actuator
10d to 20d driver circuit
50 computer
100 control apparatus for automated manufacturing machine
100a YOGO chart processor
100b controller
100m monitor screen
100s operation button
102 element action storage
105 control program generator
106 control unit
107 program element storage
110 control program generation apparatus
201 separation line
202 trigger line
203 action line
204 start point
205 end point
206 element action

## Claims

1. A control program generation apparatus (100a, 110) for generating a control program for an automated manufacturing machine (1) including a plurality of actuators (10 to 20), the apparatus (100a, 110) comprising:
an element action storage (102) storing a plurality of element actions (206), each of the plurality of element actions indicating an action from a start to an end of a corresponding actuator of the plurality of actuators in a direction of an inherent degree of freedom of the corresponding actuator by a specified displacement, each of the element actions being associated with a program element to perform the element action;
an action chart reader (103) configured to read an action chart (200) describing an operation of the automated manufacturing machine, the action chart (200) including a plurality of subperiods into which an operation period from a start to an end of the operation of the automated manufacturing machine is divided, the action chart including the plurality of element actions included in the operation of the automated manufacturing machine, the plurality of element actions being assigned to the plurality of subperiods, wherein each of the plurality of subperiods is assigned with at least one of the element actions; and
a control program generator (105) configured to generate the control program to cause the automated manufacturing machine to operate by combining together, in an order of the plurality of subperiods on the action chart, the plurality of program elements for the plurality of element actions assigned to the plurality of subperiods on the action chart.

2. The control program generation apparatus according to claim 1, wherein
the action chart reader is adapted to read the action chart describing the operation of the automated manufacturing machine, the action chart is a table including the plurality of subperiods arranged in one of a horizontal direction or a vertical direction and the plurality of actuators assigned and arranged in the other of the horizontal direction or the vertical direction, and the action chart includes the plurality of element actions each at a coordinate position on the action chart.

3. The control program generation apparatus according to claim 1 or claim 2, wherein
the element action storage is adapted to store, in addition to the plurality of element actions, at least one of a timing action to be performed with a timer or a counting action to be performed with a counter in a manner associated with a program element to perform the timing action or the counting action, and
the action chart reader is adapted to read the action chart including at least one of the timing action or the counting action assigned to one of the plurality of subperiods.

4. The control program generation apparatus according to any one of claims 1 to 3, wherein
the element action storage is adapted to store, in addition to the plurality of element actions, a switching detection action to monitor a state of a switch and detect switching in a manner associated with a program element to perform the switching detection action, and
the action chart reader is adapted to read the action chart including the switching detection action assigned to one of the plurality of subperiods.

5. The control program generation apparatus according to any one of claims 1 to 4, wherein
the element action storage is adapted to store, in addition to the plurality of element actions, at least one of a sound output action to be performed with a speaker or a lighting action to be performed with an illuminator in a manner associated with a program element to perform the sound output action or the lighting action, and
the action chart reader is adapted to read the action chart including at least one of the sound output action or the lighting action.

6. The control program generation apparatus according to any one of claims 1 to 5, wherein
the element action storage is adapted to store, in addition to the plurality of element actions, a heating action to be performed with a heater in a manner associated with a program element to perform the heating action, and
the action chart reader is adapted to read the action chart including the heating action.

7. A control program generation method for generating, with a computer, a control program for an automated manufacturing machine (1) including a plurality of actuators (10 to 20), the method comprising:
reading (STEP 1) an action chart (200) describing an operation of the automated manufacturing machine, the action chart including a plurality of subperiods into which an operation period from a start to an end of the operation of the automated manufacturing machine is divided, the action chart including a plurality of element actions (206) included in the operation of the automated manufacturing machine, each of the plurality of element actions indicating an action from a start to an end of a corresponding actuator of the plurality of actuators in a direction of an inherent degree of freedom of the corresponding actuator by a specified displacement, the plurality of element actions being assigned to the plurality of subperiods, wherein each of the plurality of subperiods is assigned with at least one of the element actions;
analyzing (STEP 2) the action chart to extract, from the action chart, the plurality of element actions and the plurality of subperiods assigned with the plurality of element actions; and
generating (STEP 3) the control program to cause the automated manufacturing machine to operate by referring to correspondences between the plurality of element actions and a plurality of program elements each stored in a manner associated with a corresponding element action of the plurality of element actions to perform the corresponding element action, converting the plurality of element actions described on the action chart into the plurality of program elements and combining the plurality of program elements together in an order of the plurality of subperiods.

8. A program for causing a computer to implement a method for generating a control program for an automated manufacturing machine (1) including a plurality of actuators (10 to 20), the program causing the computer to perform operations comprising:
reading (STEP 1) an action chart (200) describing an operation of the automated manufacturing machine, the action chart including a plurality of subperiods into which an operation period from a start to an end of the operation of the automated manufacturing machine is divided, the action chart including a plurality of element actions (206) included in the operation of the automated manufacturing machine, each of the plurality of element actions indicating an action from a start an the end a corresponding actuator of the plurality of actuators in a direction of an inherent degree of freedom of the corresponding actuator by a specified displacement, the plurality of element actions being assigned to the plurality of subperiods, wherein each of the plurality of subperiods is assigned with at least one of the element actions;
analyzing (STEP 2) the action chart to extract, from the action chart, the plurality of element actions and the plurality of subperiods assigned with the plurality of element actions; and
generating (STEP 3) the control program to cause the automated manufacturing machine to operate by referring to correspondences between the plurality of element actions and a plurality of program elements stored in a manner associated with a corresponding element action of the plurality of element actions to perform the corresponding element action, converting the plurality of element actions described on the action chart into the plurality of program elements, and combining the plurality of program elements together in an order of the plurality of subperiods.

## Patentansprüche

1. Steuerungsprogrammerzeugungsvorrichtung (100a, 110) zur Erzeugung eines Steuerungsprogramms für eine automatisierte Fertigungsmaschine (1), die eine Vielzahl von Aktuatoren (10 bis 20) umfasst, wobei die Vorrichtung (100a, 110) umfasst:
einen Elementaktionsspeicher (102), der eine Vielzahl von Elementaktionen (206) speichert, wobei jede der Vielzahl von Elementaktionen eine Aktion von einem Beginn zu einem Ende eines entsprechenden Aktuators der Vielzahl von Aktuatoren in einer Richtung eines inhärenten Freiheitsgrads des entsprechenden Aktuators um eine angegebene Verschiebung angibt, wobei jede der Elementaktionen mit einem Programmelement zur Durchführung der Elementaktion verknüpft ist;
einen Aktionsdiagrammleser (103), der dazu konfiguriert ist, ein Aktionsdiagramm (200) zu lesen, das einen Betrieb der automatisierten Fertigungsmaschine beschreibt, wobei das Aktionsdiagramm (200) eine Vielzahl von Teilzeiträumen umfasst, in die ein Betriebszeitraum von einem Beginn bis zu einem Ende des Betriebs der automatisierten Fertigungsmaschine unterteilt ist, wobei das Aktionsdiagramm die Vielzahl von Elementaktionen umfasst, die in dem Betrieb der automatisierten Fertigungsmaschine enthalten sind, wobei die Vielzahl von Elementaktionen der Vielzahl von Teilzeiträumen zugewiesen ist, wobei jedem der Vielzahl von Teilzeiträumen mindestens eine der Elementaktionen zugewiesen ist; und
einen Steuerungsprogrammgenerator (105), der dazu konfiguriert ist, das Steuerungsprogramm zu erzeugen, um die automatisierte Fertigungsmaschine zum Betrieb zu veranlassen, indem die Vielzahl von Programmelementen für die der Vielzahl von Teilzeiträumen auf dem Aktionsdiagramm zugewiesene Vielzahl von Elementaktionen in einer Reihenfolge der Vielzahl von Teilzeiträumen auf dem Aktionsdiagramm miteinander kombiniert wird.

2. Steuerungsprogrammerzeugungsvorrichtung nach Anspruch 1, wobei
der Aktionsdiagrammleser dazu ausgelegt ist, das Aktionsdiagramm zu lesen, das den Betrieb der automatisierten Fertigungsmaschine beschreibt, das Aktionsdiagramm eine Tabelle ist, die die Vielzahl von Teilzeiträumen, die in einer von einer horizontalen Richtung oder einer vertikalen Richtung angeordnet sind, und die Vielzahl von Aktuatoren, die in der anderen von der horizontalen Richtung oder der vertikalen Richtung zugewiesen und angeordnet sind, umfasst, und das Aktionsdiagramm die Vielzahl von Elementaktionen jeweils an einer Koordinatenposition auf dem Aktionsdiagramm umfasst.

3. Steuerungsprogrammerzeugungsvorrichtung nach Anspruch 1 oder Anspruch 2, wobei der Elementaktionsspeicher dazu ausgelegt ist, zusätzlich zu der Vielzahl von Elementaktionen mindestens eine von einer mit einem Zeitgeber durchzuführenden Zeitgeberaktion oder einer mit einem Zähler durchzuführenden Zählaktion in einer mit einem Programmelement zur Durchführung der Zeitgeberaktion oder der Zählaktion verknüpften Weise zu speichern, und der Aktionsdiagrammleser dazu ausgelegt ist, das Aktionsdiagramm zu lesen, das mindestens eine von der Zeitgeberaktion oder der Zählaktion umfasst, die einem der Vielzahl von Teilzeiträumen zugewiesen ist.

4. Steuerungsprogrammerzeugungsvorrichtung nach einem der Ansprüche 1 bis 3, wobei der Elementaktionsspeicher dazu ausgelegt ist, zusätzlich zu der Vielzahl von Elementaktionen eine Schaltdetektionsaktion zum Überwachen eines Zustands eines Schalters und zum Detektieren eines Umschaltens in einer mit einem Programmelement zur Durchführung der Schaltdetektionsaktion verknüpften Weise zu speichern, und
der Aktionsdiagrammleser dazu ausgelegt ist, das Aktionsdiagramm zu lesen, das die einem der Vielzahl von Teilzeiträumen zugewiesene Schaltdetektionsaktion umfasst.

5. Steuerungsprogrammerzeugungsvorrichtung nach einem der Ansprüche 1 bis 4, wobei der Elementaktionsspeicher dazu ausgelegt ist, zusätzlich zu der Vielzahl von Elementaktionen mindestens eine von einer mit einem Lautsprecher durchzuführenden Tonausgabeaktion oder einer mit einer Beleuchtungseinrichtung durchzuführenden Beleuchtungsaktion in einer mit einem Programmelement zur Durchführung der Tonausgabeaktion oder der Beleuchtungsaktion verknüpften Weise zu speichern, und
der Aktionsdiagrammleser dazu ausgelegt ist, das Aktionsdiagramm zu lesen, das mindestens eine von der Tonausgabeaktion oder der Beleuchtungsaktion umfasst.

6. Steuerungsprogrammerzeugungsvorrichtung nach einem der Ansprüche 1 bis 5, wobei der Elementaktionsspeicher dazu ausgelegt ist, zusätzlich zu der Vielzahl von Elementaktionen eine mit einem Heizgerät durchzuführende Heizaktion in einer mit einem Programmelement zur Durchführung der Heizaktion verknüpften Weise zu speichern, und
der Aktionsdiagrammleser dazu ausgelegt ist, das Aktionsdiagramm zu lesen, das die Heizaktion umfasst.

7. Steuerungsprogrammerzeugungsverfahren zum Erzeugen, mit einem Computer, eines Steuerungsprogramms für eine automatisierte Fertigungsmaschine (1), die eine Vielzahl von Aktuatoren (10 bis 20) umfasst, wobei das Verfahren umfasst:
Lesen (STEP 1) eines Aktionsdiagramms (200), das einen Betrieb der automatisierten Fertigungsmaschine beschreibt, wobei das Aktionsdiagramm eine Vielzahl von Teilzeiträumen umfasst, in die ein Betriebszeitraum von einem Beginn bis zu einem Ende des Betriebs der automatisierten Fertigungsmaschine unterteilt ist, wobei das Aktionsdiagramm eine Vielzahl von Elementaktionen (206) umfasst, die in dem Betrieb der automatisierten Fertigungsmaschine enthalten sind, wobei jede der Vielzahl von Elementaktionen eine Aktion von einem Beginn zu einem Ende eines entsprechenden Aktuators der Vielzahl von Aktuatoren in einer Richtung eines inhärenten Freiheitsgrads des entsprechenden Aktuators um eine angegebene Verschiebung angibt, wobei die Vielzahl von Elementaktionen der Vielzahl von Teilzeiträumen zugewiesen ist, wobei jedem der Vielzahl von Teilzeiträumen mindestens eine der Elementaktionen zugewiesen ist;
Analysieren (STEP 2) des Aktionsdiagramms, um aus dem Aktionsdiagramm die Vielzahl von Elementaktionen und die Vielzahl von Teilzeiträumen, denen die Vielzahl von Elementaktionen zugewiesen ist, zu extrahieren; und
Erzeugen (STEP 3) des Steuerungsprogramms, um die automatisierte Fertigungsmaschine zum Betrieb zu veranlassen, durch Bezugnahme auf Entsprechungen zwischen der Vielzahl von Elementaktionen und einer Vielzahl von Programmelementen, die jeweils in einer mit einer entsprechenden Elementaktion der Vielzahl von Elementaktionen verknüpften Weise gespeichert sind, um die entsprechende Elementaktion durchzuführen, Umwandeln der auf dem Aktionsdiagramm beschriebenen Vielzahl von Elementaktionen in die Vielzahl von Programmelementen und Kombinieren der Vielzahl von Programmelementen miteinander in einer Reihenfolge der Vielzahl von Teilzeiträumen.

8. Programm zum Veranlassen eines Computers, ein Verfahren zum Erzeugen eines Steuerungsprogramms für eine automatisierte Fertigungsmaschine (1), die eine Vielzahl von Aktuatoren (10 bis 20) umfasst, zu implementieren, wobei das Programm den Computer veranlasst, Operationen durchzuführen, umfassend:
Lesen (STEP 1) eines Aktionsdiagramms (200), das einen Betrieb der automatisierten Fertigungsmaschine beschreibt, wobei das Aktionsdiagramm eine Vielzahl von Teilzeiträumen umfasst, in die ein Betriebszeitraum von einem Beginn bis zu einem Ende des Betriebs der automatisierten Fertigungsmaschine unterteilt ist, wobei das Aktionsdiagramm eine Vielzahl von Elementaktionen (206) umfasst, die in dem Betrieb der automatisierten Fertigungsmaschine enthalten sind, wobei jede der Vielzahl von Elementaktionen eine Aktion von einem Beginn zu einem Ende eines entsprechenden Aktuators der Vielzahl von Aktuatoren in einer Richtung eines inhärenten Freiheitsgrads des entsprechenden Aktuators um eine angegebene Verschiebung angibt, wobei die Vielzahl von Elementaktionen der Vielzahl von Teilzeiträumen zugewiesen ist, wobei jedem der Vielzahl von Teilzeiträumen mindestens eine der Elementaktionen zugewiesen ist;
Analysieren (STEP 2) des Aktionsdiagramms, um aus dem Aktionsdiagramm die Vielzahl von Elementaktionen und die Vielzahl von Teilzeiträumen, denen die Vielzahl von Elementaktionen zugewiesen ist, zu extrahieren; und
Erzeugen (STEP 3) des Steuerungsprogramms, um die automatisierte Fertigungsmaschine zum Betrieb zu veranlassen, durch Bezugnahme auf Entsprechungen zwischen der Vielzahl von Elementaktionen und einer Vielzahl von Programmelementen, die in einer mit einer entsprechenden Elementaktion der Vielzahl von Elementaktionen verknüpften Weise gespeichert sind, um die entsprechende Elementaktion durchzuführen, Umwandeln der auf dem Aktionsdiagramm beschriebenen Vielzahl von Elementaktionen in die Vielzahl von Programmelementen und Kombinieren der Vielzahl von Programmelementen miteinander in einer Reihenfolge der Vielzahl von Teilzeiträumen.

## Revendications

1. Dispositif de génération de programme de commande (100a, 110) pour générer un programme de commande pour une machine de fabrication automatisée (1) comprenant une pluralité d'actionneurs (10 à 20), le dispositif (100a, 110) comprenant :
une mémoire d'actions élémentaires (102) stockant une pluralité d'actions élémentaires (206), chacune de la pluralité d'actions élémentaires indiquant une action d'un début à une fin d'un actionneur correspondant de la pluralité d'actionneurs dans une direction d'un degré de liberté inhérent de l'actionneur correspondant d'un déplacement spécifié, chacune des actions élémentaires étant associée à un élément de programme pour effectuer l'action élémentaire ;
un lecteur de diagramme d'actions (103) configuré pour lire un diagramme d'actions (200) décrivant un fonctionnement de la machine de fabrication automatisée, le diagramme d'actions (200) comprenant une pluralité de sous-périodes en lesquelles une période de fonctionnement d'un début à une fin du fonctionnement de la machine de fabrication automatisée est divisée, le diagramme d'actions comprenant la pluralité d'actions élémentaires incluses dans le fonctionnement de la machine de fabrication automatisée, la pluralité d'actions élémentaires étant attribuée à la pluralité de sous-périodes, dans lequel au moins une des actions élémentaires est attribuée à chacune de la pluralité de sous-périodes ; et
un générateur de programme de commande (105) configuré pour générer le programme de commande pour amener la machine de fabrication automatisée à fonctionner en combinant ensemble, dans un ordre de la pluralité de sous-périodes sur le diagramme d'actions, la pluralité d'éléments de programme pour la pluralité d'actions élémentaires attribuées à la pluralité de sous-périodes sur le diagramme d'actions.

2. Dispositif de génération de programme de commande selon la revendication 1, dans lequel le lecteur de diagramme d'actions est adapté pour lire le diagramme d'actions décrivant le fonctionnement de la machine de fabrication automatisée, le diagramme d'actions est un tableau comprenant la pluralité de sous-périodes agencées dans l'une d'une direction horizontale ou d'une direction verticale et la pluralité d'actionneurs attribués et agencés dans l'autre de la direction horizontale ou de la direction verticale, et le diagramme d'actions comprend la pluralité d'actions élémentaires chacune à une position de coordonnées sur le diagramme d'actions.

3. Dispositif de génération de programme de commande selon la revendication 1 ou la revendication 2, dans lequel
la mémoire d'actions élémentaires est adaptée pour stocker, en plus de la pluralité d'actions élémentaires, au moins l'une d'une action de temporisation à effectuer avec un temporisateur ou d'une action de comptage à effectuer avec un compteur d'une manière associée à un élément de programme pour effectuer l'action de temporisation ou l'action de comptage, et
le lecteur de diagramme d'actions est adapté pour lire le diagramme d'actions comprenant au moins l'une de l'action de temporisation ou de l'action de comptage attribuée à l'une de la pluralité de sous-périodes.

4. Dispositif de génération de programme de commande selon l'une quelconque des revendications 1 à 3, dans lequel
la mémoire d'actions élémentaires est adaptée pour stocker, en plus de la pluralité d'actions élémentaires, une action de détection de commutation pour surveiller un état d'un commutateur et détecter une commutation d'une manière associée à un élément de programme pour effectuer l'action de détection de commutation, et
le lecteur de diagramme d'actions est adapté pour lire le diagramme d'actions comprenant l'action de détection de commutation attribuée à l'une de la pluralité de sous-périodes.

5. Dispositif de génération de programme de commande selon l'une quelconque des revendications 1 à 4, dans lequel
la mémoire d'actions élémentaires est adaptée pour stocker, en plus de la pluralité d'actions élémentaires, au moins l'une d'une action de sortie sonore à effectuer avec un haut-parleur ou d'une action d'éclairage à effectuer avec un dispositif d'éclairage d'une manière associée à un élément de programme pour effectuer l'action de sortie sonore ou l'action d'éclairage, et
le lecteur de diagramme d'actions est adapté pour lire le diagramme d'actions comprenant au moins l'une de l'action de sortie sonore ou de l'action d'éclairage.

6. Dispositif de génération de programme de commande selon l'une quelconque des revendications 1 à 5, dans lequel
la mémoire d'actions élémentaires est adaptée pour stocker, en plus de la pluralité d'actions élémentaires, une action de chauffage à effectuer avec un dispositif de chauffage d'une manière associée à un élément de programme pour effectuer l'action de chauffage, et
le lecteur de diagramme d'actions est adapté pour lire le diagramme d'actions comprenant l'action de chauffage.

7. Procédé de génération de programme de commande pour générer, avec un ordinateur, un programme de commande pour une machine de fabrication automatisée (1) comprenant une pluralité d'actionneurs (10 à 20), le procédé comprenant :
la lecture (STEP 1) d'un diagramme d'actions (200) décrivant un fonctionnement de la machine de fabrication automatisée, le diagramme d'actions comprenant une pluralité de sous-périodes en lesquelles une période de fonctionnement d'un début à une fin du fonctionnement de la machine de fabrication automatisée est divisée, le diagramme d'actions comprenant une pluralité d'actions élémentaires (206) incluses dans le fonctionnement de la machine de fabrication automatisée, chacune de la pluralité d'actions élémentaires indiquant une action d'un début à une fin d'un actionneur correspondant de la pluralité d'actionneurs dans une direction d'un degré de liberté inhérent de l'actionneur correspondant d'un déplacement spécifié, la pluralité d'actions élémentaires étant attribuée à la pluralité de sous-périodes, dans lequel au moins une des actions élémentaires est attribuée à chacune de la pluralité de sous-périodes ;
l'analyse (STEP 2) du diagramme d'actions pour extraire, du diagramme d'actions, la pluralité d'actions élémentaires et la pluralité de sous-périodes auxquelles la pluralité d'actions élémentaires est attribuée ; et
la génération (STEP 3) du programme de commande pour amener la machine de fabrication automatisée à fonctionner en se référant à des correspondances entre la pluralité d'actions élémentaires et une pluralité d'éléments de programme chacun stocké d'une manière associée à une action élémentaire correspondante de la pluralité d'actions élémentaires pour effectuer l'action élémentaire correspondante, en convertissant la pluralité d'actions élémentaires décrites sur le diagramme d'actions en la pluralité d'éléments de programme et en combinant ensemble la pluralité d'éléments de programme dans un ordre de la pluralité de sous-périodes.

8. Programme pour amener un ordinateur à mettre en œuvre un procédé de génération d'un programme de commande pour une machine de fabrication automatisée (1) comprenant une pluralité d'actionneurs (10 à 20), le programme amenant l'ordinateur à effectuer des opérations comprenant :
la lecture (STEP 1) d'un diagramme d'actions (200) décrivant un fonctionnement de la machine de fabrication automatisée, le diagramme d'actions comprenant une pluralité de sous-périodes en lesquelles une période de fonctionnement d'un début à une fin du fonctionnement de la machine de fabrication automatisée est divisée, le diagramme d'actions comprenant une pluralité d'actions élémentaires (206) incluses dans le fonctionnement de la machine de fabrication automatisée, chacune de la pluralité d'actions élémentaires indiquant une action d'un début à une fin d'un actionneur correspondant de la pluralité d'actionneurs dans une direction d'un degré de liberté inhérent de l'actionneur correspondant d'un déplacement spécifié, la pluralité d'actions élémentaires étant attribuée à la pluralité de sous-périodes, dans lequel au moins une des actions élémentaires est attribuée à chacune de la pluralité de sous-périodes ;
l'analyse (STEP 2) du diagramme d'actions pour extraire, du diagramme d'actions, la pluralité d'actions élémentaires et la pluralité de sous-périodes auxquelles la pluralité d'actions élémentaires est attribuée ; et
la génération (STEP 3) du programme de commande pour amener la machine de fabrication automatisée à fonctionner en se référant à des correspondances entre la pluralité d'actions élémentaires et une pluralité d'éléments de programme stockés d'une manière associée à une action élémentaire correspondante de la pluralité d'actions élémentaires pour effectuer l'action élémentaire correspondante, en convertissant la pluralité d'actions élémentaires décrites sur le diagramme d'actions en la pluralité d'éléments de programme, et en combinant ensemble la pluralité d'éléments de programme dans un ordre de la pluralité de sous-périodes.
